# EUROPEAN PATENT APPLICATION

(11) **EP 4 253 643 A1**
(43) Date of publication of application: **04.10.2023**
(21) Application number: 21898188.4
(22) Date of filing: 30.11.2021
(51) Int. Cl.: D06M 11/74, C08J 5/06, D06M 15/327, D06M 15/356, D06M 101/40

(54) **COMPOSITE MATERIAL, METHOD FOR PRODUCING SAME, AND METHOD FOR PRODUCING REINFORCING FIBER BASE MATERIAL**

(30) Priority: 30.11.2020 JP 2020199242
(71) Applicant: Nitta Corporation, Osaka-shi, Osaka 556-0022 (JP)
(72) Inventor: KOMUKAI, Takuji, Osaka-shi, Osaka 556-0022 (JP); ONIZUKA, Maki, Osaka-shi, Osaka 556-0022 (JP)
(74) Representative: Bandpay & Greuter
(86) International application number: PCT/JP2021/043820
(87) International publication number: WO 2022/114217

(57) **Abstract**

To provide a composite material capable of further enhancing properties derived from the CNTs, a method for producing the composite material, and a method for producing a reinforced fiber base material. In a composite material 10, a structure 14 constituted by a plurality of carbon nanotubes 17 is formed on a surface of each of carbon fibers 11 of a carbon fiber bundle 12 constituting the composite material 10. The carbon nanotubes 17 have a bent shape. The carbon nanotubes 17 adhere to surfaces of the carbon fibers 11 which are curved surfaces in various postures to form the structure 14. A first sizing agent cross-links the carbon nanotubes 17 which are in direct contact with each other by a carbodiimide-derived structure obtained by reaction between a functional group of the carbon nanotubes 17 and a carbodiimide group.

## Description

### Technical Field

The present invention relates to a composite material, a method for producing the same, and a method for producing a reinforced fiber base material.

### Background Art

As a composite material, for example, there is known a composite material including carbon fibers as a base material, and a structure constituted by a plurality of carbon nanotubes (hereinafter, referred to as "CNTs") adhered to surfaces of the carbon fibers (for example, refer to PTL 1). The structure of the composite material, forms a network structure in which the plurality of CNTs are connected to each other and adhere to the surfaces of the carbon fibers. A carbon fiber-reinforced molded article in which a resin is reinforced by the composite material as a reinforcement fiber includes the carbon fibers, and thus higher strength and rigidity are obtained in comparison to a resin alone, and has improved electrical conductivity, thermal conductivity, and mechanical properties which are derived from the CNTs.

### Citation List

### Patent Literature

PTL 1: JP-A-2013-76198

### Summary of Invention

### Technical Problem

The use of the carbon fiber-reinforced molded article employing the composite material has been expanded into various fields. According to this, the carbon fiber-reinforced molded article is required to have high performance, and requirements for mechanical properties and the like have further increased. According to this, there is a demand for a composite material capable of further enhancing properties derived from the CNTs.

An object of the invention is to provide a composite material capable of further enhancing properties derived from the CNTs, a method for producing the composite material, and a method for producing a reinforced fiber base material.

### Solution to Problem

According to the invention, there is provided a composite material including: a base material; a structure which includes a plurality of carbon nanotubes having a bent shape with a bent portion, forms a network structure including a contact portion where the carbon nanotubes are in direct contact with each other, and is provided on a surface of the base material; and a first sizing agent that is provided at least around the contact portion, and cross-links the carbon nanotubes which are in direct contact with each other by a carbodiimide-derived structure obtained by reaction between a functional group of the carbon nanotubes and a carbodiimide group.

According to the invention, there is provided a method for producing a composite material. The method includes: a structure forming process of immersing a base material in a dispersion in which a plurality of carbon nanotubes having a bent shape with a bent portion are dispersed and to which ultrasonic vibration is applied to adhere the plurality of carbon nanotubes to the base material, thereby forming a structure having a network structure including a contact portion where the carbon nanotubes are in direct contact with each other on a surface of the base material; and a first sizing treatment process of causing the base material to come into contact with a first sizing treatment solution in which a carbodiimide compound having a carbodiimide group is dissolved to apply a first sizing agent for cross-linking the carbon nanotubes which are in direct contact with each other.

According to the invention, there is provided a method for producing a reinforced fiber base material. The method includes: a base material preparing process of preparing a reinforced fiber base material by using a fiber bundle which is constituted by a plurality of fibers, in which a structure having a network structure including a contact portion where a plurality of carbon nanotubes having a bent shape with a bent portion are in direct contact with each other is formed on a surface of each of the plurality of fibers, and which includes a first sizing agent that is provided at least around the contact portion and cross-links the carbon nanotubes which are in direct contact with each other by a carbodiimide-derived structure obtained by reaction between a functional group of the carbon nanotubes and a carbodiimide group, and a protection agent that adheres to a surface of the structure to cover the surface of the structure and is composed of a water-soluble polymer; and a cleaning process of cleaning the reinforced fiber base material with water to remove the protection agent from the reinforced fiber base material.

### Advantageous Effects of Invention

According to the invention, since it becomes a state in which carbon nanotubes constituting a structure are cross-linked by a first sizing agent having a carbodiimide-derived structure, and the carbon nanotubes strongly adhere to each other, the structure is less likely to collapse, and it is possible to further enhance properties derived from the carbon nanotubes in the composite material.

### Brief Description of Drawings

Fig. 1 is an explanatory diagram illustrating a configuration of a composite material according to an embodiment.
Fig. 2 is an explanatory diagram illustrating an adhesion state of a first sizing agent to CNT.
Fig. 3 is an explanatory diagram illustrating an adhesion state of the first sizing agent in a contact portion where the CNTs are in contact with each other.
Fig. 4 is an explanatory diagram illustrating another adhesion state of the first sizing agent to the CNTs.
Fig. 5 is an explanatory diagram illustrating another adhesion state of the first sizing agent in a contact portion where the CNTs are in contact with each other.
Fig. 6 is an explanatory diagram illustrating a configuration of an adhesion device that causes the CNTs to adhere to a carbon fiber.
Fig. 7 is an explanatory diagram illustrating a carbon fiber bundle in a state of being opened on a guide roller.
Fig. 8 is an explanatory diagram illustrating a passing position of the carbon fiber in a dispersion.
Fig. 9 is an explanatory diagram schematically illustrating a configuration of a prepreg.
Fig. 10 is an explanatory diagram schematically illustrating a carbon fiber-reinforced molded article.
Fig. 11 is an explanatory diagram illustrating a state in which carbon fibers are cross-linked.
Fig. 12 is an image showing an internal structure of a rod using a composite material which is obtained by X-ray CT.
Fig. 13 is an image showing an internal structure of a rod using a raw fiber of the carbon fiber which is obtained by X-ray CT.
Fig. 14 is an explanatory diagram illustrating an adhesion state of a second sizing agent to the CNTs.
Fig. 15 is an explanatory diagram illustrating a multi-filament in which a composite material is set as a single yarn.
Fig. 16 is an explanatory diagram illustrating a producing process in a second embodiment.
Fig. 17 is an explanatory diagram illustrating a CNT composite fiber to which a protection agent is applied.
Fig. 18 is a SEM photograph showing a surface of the CNT composite fiber to which the protection agent adheres.
Fig. 19 is a SEM photograph showing a surface of the CNT composite fiber after cleaning.
Fig. 20 is a photograph showing a surface of a reinforced fiber base material produced from a carbon fiber bundle to which the protection agent is applied.
Fig. 21 is a photograph showing a surface of a reinforced fiber base material produced from a carbon fiber bundle to which the protection agent is not applied.
Fig. 22 is a SEM photograph showing a bent state of a material CNT used in Example.
Fig. 23 is a graph showing three-point bending test result of Example 3.
Fig. 24 is a graph showing NOL ring test results of Example 4.
Fig. 25 is a graph showing a cut fiber length by a fragmentation method of Example 5.
Fig. 26 is a SEM photograph showing an adhesion state of the first sizing agent to a structure in which a mass ratio Rm of the sizing agent is 0.8%.
Fig. 27 is a SEM photograph showing an adhesion state of the first sizing agent to a structure in which a mass ratio Rm of the sizing agent is 1.1%.
Fig. 28 is a SEM photograph showing an adhesion state of the first sizing agent to a structure in which a mass ratio Rm of the sizing agent is 1.5%.
Fig. 29 is a SEM photograph showing a structure formed by causing the CNTs to uniformly adhere to a surface of the carbon fiber in a sufficient adhesion amount.
Fig. 30 is a SEM photograph showing a structure in which the adhesion amount of the CNTs to the surface of the carbon fiber is not uniform.
Fig. 31 is a graph showing a cut fiber length of Example 6 which is measured by the fragmentation method.

### Description of Embodiments

### [First Embodiment]

### [Composite Material]

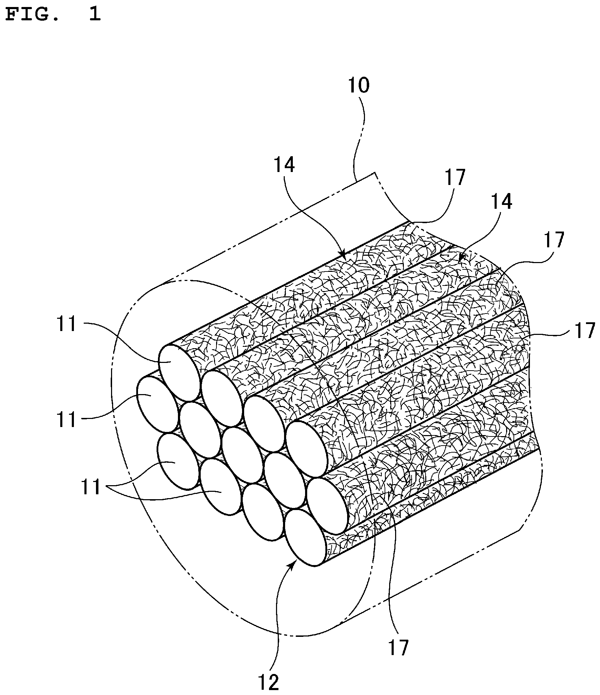

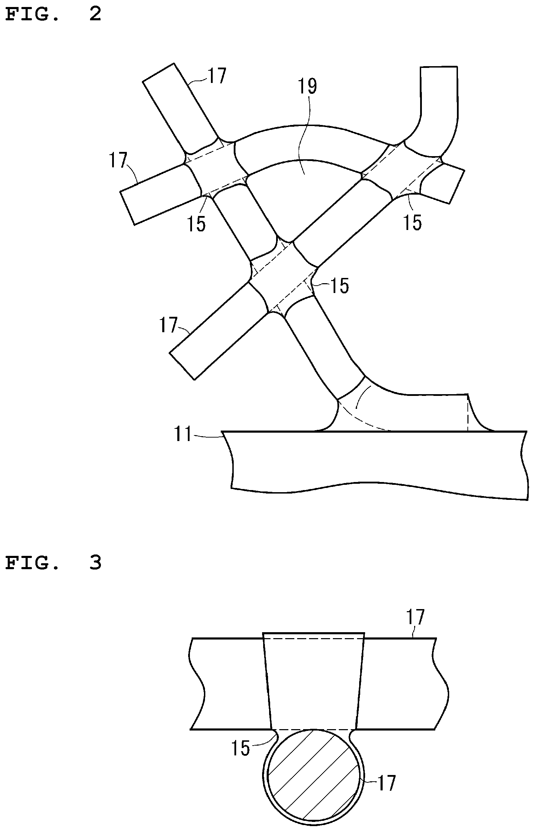

In Fig. 1, a composite material 10 includes a carbon fiber bundle 12 in which a plurality of continuous carbon fibers 11 are arranged. A structure 14 is formed on a surface of each of the carbon fibers 11, and a first sizing agent 15 (refer to Fig. 2) is applied to the structure 14.

The carbon fibers 11 which constitute the carbon fiber bundle 12 are not substantially entangled with each other, and a fiber axis direction of each of the carbon fibers 11 is aligned. The fiber axis direction is a direction (extension direction) of an axis of the carbon fiber 11. In this example, the carbon fiber bundle 12 is constituted by 12000 carbon fibers 11. The number of the carbon fibers 11 which constitute the carbon fiber bundle 12 is not particularly limited, and may be set, for example, within a range of 10000 to 100000. Note that, in Fig. 1, only a dozen pieces of the carbon fibers 11 are drawn for convenience of explanation. In addition, in this example, the composite material 10 includes the plurality of carbon fibers 11 including the structure 14 and the first sizing agent 15, but the composite material 10 may be one carbon fiber 11 including the structure 14 and the first sizing agent 15. Note that, in the following description, a fiber (in this example, the carbon fiber 11) in which the structure 14 is formed on a surface thereof is referred to as a CNT composite fiber in combination with the structure 14.

Entanglement of the carbon fibers 11 in the carbon fiber bundle 12 can be evaluated with the degree of disturbance of the carbon fibers 11. For example, the carbon fiber bundle 12 is observed with a scanning electron microscope (SEM) at a constant magnification, and lengths of a predetermined number of (for example, 10) carbon fibers 11 in an observation range (a predetermined length range of the carbon fiber bundle 12) are measured. The degree of disturbance of the carbon fibers 11 can be evaluated on the basis of a variation, a difference between a maximum value and a minimum value, and a standard deviation of the lengths which are obtained from the measurement results and relate to the predetermined number of carbon fibers 11. In addition, it can be determined that the carbon fibers 11 are not substantially entangled by measuring the degree of entanglement, for example, in conformity to a method of measuring the degree of entanglement in JIS L1013:2010 "Testing methods for man-made filament yarns". The smaller the measured degree of entanglement is, the less the carbon fibers 11 are entangled with each other in the carbon fiber bundle 12.

In the carbon fiber bundle 12 in which the carbon fibers 11 are not substantially entangled with each other, or are less entangled with each other, the carbon fibers 11 are likely to be uniformly opened. According to this, it is easy to cause a CNT 17 to uniformly adhere to the carbon fibers 11 as a raw fiber. In addition, in the CNT composite fiber, a resin is uniformly impregnated into the carbon fiber bundle 12 when producing a prepreg or a carbon fiber-reinforced molded article, and each of the carbon fibers 11 contributes to the strength.

The carbon fibers 11 is not particularly limited, but can use a PAN-based or pitch-based fiber obtained by baking an organic fiber derived from petroleum, coal, and coal tar such as polyacrylic nitrile, rayon and pitch, an organic fiber derived from wood or a plant fiber, and the like, and the carbon fibers 11 may be commercially available carbon fibers. In addition, with regard to a diameter and a length of the carbon fibers 11, there is no particular limitation. As the carbon fibers 11, a fiber having a diameter in a range of approximately 5 µm to 20 µm can be preferably used, and a fiber having a diameter in a range of approximately 5 µm to 10 µm can be more preferably used. As the carbon fibers 11, a long fiber can be preferably used, and a length thereof is preferably 50 m or longer, more preferably in a range of 100 m to 100000 m, and still more preferably in a range of 100 m to 10000 m. Note that, when a prepreg or a carbon fiber-reinforced molded article is formed, the carbon fibers 11 may be cut short.

As described above, the structure 14 is formed on the surface of each of the carbon fibers 11. In the structure 14, a plurality of carbon nanotubes (hereinafter, referred to as "CNTs") 17 are entangled. The CNTs 17 which constitute the structure 14 are uniformly dispersed and entangled across substantially the entire surface of each of the carbon fibers 11, and form a network structure in which the plurality of CNTs 17 are connected in a state of being entangled with each other. The connection stated here includes physical connection (simple contact) and chemical connection. The CNTs 17 come into direct contact with each other without intervening materials such as a dispersing agent including a surfactant, and adhesive therebetween.

Some of the CNTs 17 which constitute the structure 14 directly adhere and are fixed to the surfaces of the carbon fibers 11. According to this, the structure 14 directly adheres to the surfaces of the carbon fibers 11. A structure in which the CNTs 17 directly adhere to the surfaces of the carbon fibers 11 represents that the CNTs 17 directly adhere to the carbon fibers 11 in a state in which a dispersing agent such as a surfactant, adhesive, or the like is not interposed between the CNTs 17 and the surfaces of the carbon fibers 11, and adhesion (fixing) is obtained due to bonding by Van der Waals force. Since some of the CNTs 17 which constitute the structure 14 directly adhere to the surfaces of the carbon fibers 11, it enters a state in which the structure 14 comes into direct contact with the surfaces of the carbon fibers 11 without interposing the dispersing agent, the adhesive, or the like.

In addition, some of the CNTs 17 which constitute the structure 14 are entangled with other CNTs 17 and are fixed to the carbon fibers 11 without direct contact with the surfaces of the carbon fibers 11. In addition, some of the CNTs 17 directly adhere to the surfaces of the carbon fibers 11 and are entangled with other CNTs 17 to be fixed to the carbon fibers 11. In the following description, fixing of the CNTs 17 to the carbon fibers 11 is collectively referred to as adhesion to the carbon fibers 11. Note that, a state in which the CNTs 17 are entangled or intertwined includes a state in which some of the CNTs 17 are pressed against other CNTs 17.

In addition to direct adhesion with the surfaces of the carbon fibers 11, some of the CNTs 17 which constitute the structure 14 are not in direct contact with the surfaces of the carbon fibers 11 but are fixed to the carbon fibers 11 by entanglement with other CNTs 17, or the like. Accordingly, the structure 14 of this example includes more CNTs 17 than a structure including only the CNTs which directly adhere to the surfaces of the carbon fibers as in the structure of the composite material of the related art. That is, the number of the CNTs 17 which adhere to the carbon fibers 11 further increases in comparison to the related art.

As described above, the plurality of CNTs 17 are connected to each other without intervening materials between surfaces, thereby constituting the structure 14. Accordingly, the composite material 10 exhibits performance of electric conductivity and thermal conductivity derived from the CNTs. In addition, since the CNTs 17 adhere to the surfaces of the carbon fibers 11 without intervening materials, the CNTs 17 constituting the structure 14 are less likely to be peeled off from the surfaces of the carbon fibers 11, and mechanical strength of the composite material 10 and a carbon fiber-reinforced molded article including the composite material 10 is improved.

As to be described later, in the carbon fiber-reinforced molded article, the carbon fiber bundle 12 constituted by the plurality of carbon fibers 11 on which the structure 14 is formed, that is, a plurality of CNT composite fibers is impregnated with a matrix resin, and the matrix resin is cured therein. Since the structure 14 is impregnated with the matrix resin, the structure 14 of each of the carbon fibers 11 is fixed to the matrix resin together with the surface of the carbon fiber 11. According to this, a state in which each of the carbon fibers 11 is strongly bonded to the matrix resin, that is, interface adhesion strength between the carbon fiber 11 and the matrix resin is increased, and peeling strength between the carbon fiber 11 and the matrix resin is improved. In addition, bonding with the matrix resin extends over the entire composite material 10, and thus a fiber reinforcement effect is obtained in the entirety of the carbon fiber-reinforced molded article. In addition, when the CNT 17 intervenes in a resin portion between adjacent carbon fibers 11, since an interaction between carbon fibers becomes stronger, and a decrease in strength caused by defects existing in the carbon fibers 11 is supported by other adjacent carbon fibers 11, the decrease in strength caused by the defects is suppressed.

In addition, when an external force is applied to the carbon fiber-reinforced molded article and displacement occurs at the inside of the carbon fiber-reinforced molded article, displacement occurs in the carbon fiber 11 inside the carbon fiber-reinforced molded article. Due to the displacement of the carbon fiber 11, the structure 14 is stretched, and a constraining effect is obtained due to a network structure of the CNTs 17. According to this, properties of the CNTs are exhibited, and thus an elastic modulus of the carbon fiber-reinforced molded article can be raised.

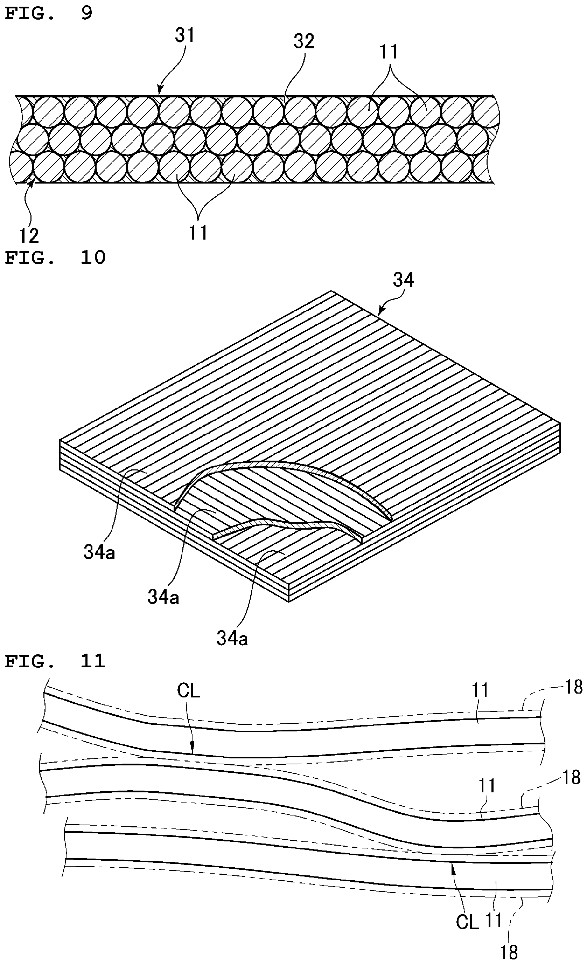

In addition, a region (hereinafter, referred to as "composite region") 18 (refer to Fig. 11), in which the CNTs 17 constituting the structure 14 is impregnated with the matrix resin and the matrix resin is cured, is formed at the periphery of the carbon fibers 11 inside the carbon fiber-reinforced molded article. The composite region 18 efficiently absorbs mechanical energy applied from the outside. That is, in a case where energy such as vibration propagates between the carbon fibers 11, the energy of the propagating vibration is absorbed by friction of the composite region 18 at the periphery of the carbon fibers 11 and is damped. As a result, for example, vibration damping property (damping property) of the carbon fiber-reinforced molded article is improved.

The structure 14 that is formed on each of the plurality of carbon fibers 11 has an independent structure, and the structure 14 of one of the carbon fibers 11 does not share the same CNT 17 with the structure 14 of another carbon fiber 11. That is, the CNTs 17 contained in the structure 14 provided in the one carbon fiber 11 is not contained in the structure 14 provided in the other carbon fiber 11.

As illustrated in Fig. 2, the first sizing agent 15 is applied to the CNTs 17 in a state of wrapping and covering a contact portion at which the CNTs 17 come into direct contact with each other. The first sizing agent 15 has a carbodiimide-derived structure obtained by reacting a functional group existing on surfaces of the CNTs 17, for example, a hydrophilic group such as a hydroxyl group (-OH) and a carboxyl group (-COOH) with a carbodiimide group (-N=C=N-) of a carbodiimide compound. That is, the first sizing agent 15 cross-links the CNTs 17 which are in direct contact with each other by the carbodiimide-derived structure. According to this, the CNTs 17 are fixed by contact portion where the CNTs 17 are in direct contact with each other, and the first sizing agent 15.

A method of applying the function group on the surfaces of the CNTs 17 is not particularly limited, and the functional group may be applied as a result of various treatments performed after manufacturing the CNTs 17, or may be applied by functional group application treatments. As the functional group application treatments, for example, a wet anodic electrolytic oxidation method, an ozone oxidation method, and the like can be employed. When a functional group exists on the surfaces of the CNTs 17 at the time of a first sizing treatment of applying the first sizing agent 15 to the structure 14, timing of applying the functional group to the surfaces of the CNTs 17 is not particularly limited.

The carbodiimide compound is a compound including two or more structures shown in Formula (1) in which n is an integer of one or greater. For example, R is hydrocarbon. Examples of the hydrocarbon include aliphatic hydrocarbon, alicyclic hydrocarbon, and aromatic hydrocarbon.

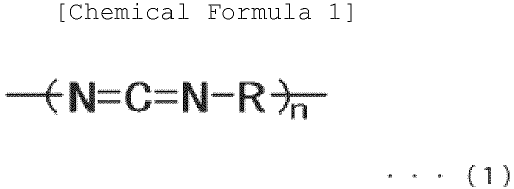

As the carbodiimide compound, for example, as described in JP-A-2007-238753 or the like, a compound that is used as a curing agent for an aqueous resin or the like can be used, or a commercially available compound may be used. Examples of the commercially available carbodiimide compound include "Carbodilite V-02" (trade name, manufactured by Nisshinbo Chemical Inc.), and the like. The carbodiimide compound including a hydrophilic segment is dissolved in water, and functions as an aqueous cross-linking agent that cross-links the CNTs 17.

As illustrated in Fig. 3, direct contact of the CNTs 17 at the contact portion is maintained, and the CNTs 17 are cross-linked by the first sizing agent 15 around the contact portion where surfaces of the CNTs 17 are close to each other.

As described above, the first sizing agent 15 acts a cross-linking agent, and cross-links the CNTs 17 which constitute the structure 14 and are in contact with each other. According to this, the adhesion state of the CNTs 17 becomes stronger, and the structure 14 is hard to collapse.

In addition, as illustrated in Fig. 2, the first sizing agent 15 adheres to the carbon fibers 11 and the CNTs 17 in a state of wrapping and covering a contact portion at which the carbon fibers 11 and the CNTs 17 which are in direct contact with the carbon fibers 11. As in the case of the CNTs 17, the first sizing agent 15 cross-links the carbon fibers 11 and the CNTs 17 by the carbodiimide-derived structure obtained when the carbodiimide group reacts with the carbon fibers 11 and the functional group on the surfaces of the CNTs 17. As described above, the first sizing agent 15 cross-links the carbon fibers 11 and the CNTs 17, and thus the adhesion state of the CNTs 17 to the carbon fibers 11 becomes stronger and the structure 14 is hard to be peeled off from the carbon fibers 11.

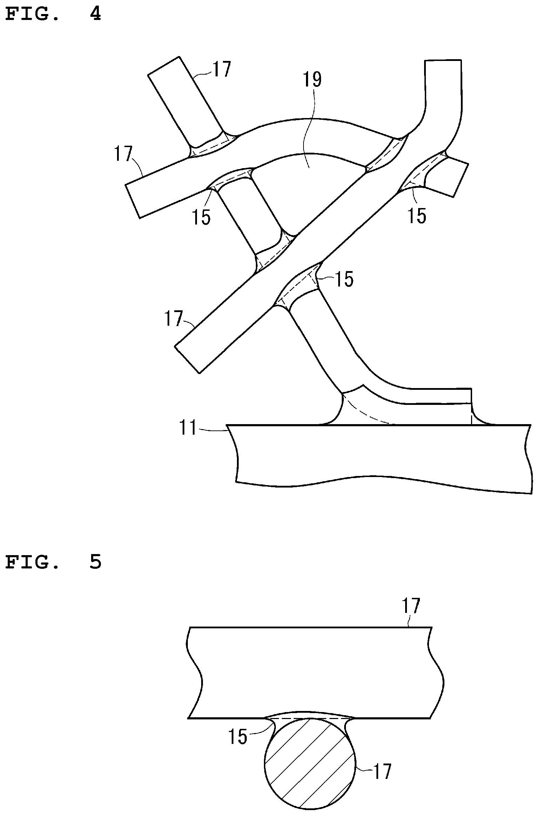

If direct contact of the CNTs 17 is maintained, and the CNTs 17 are cross-linked around a contact portion where the CNTs 17 are in direct contact with each other by the first sizing agent 15, the CNTs 17 may be wrapped and covered with the first sizing agent 15 as described above, or may not be wrapped and covered as illustrated in Fig. 4 and Fig. 5. Similarly, when the direct contact between the carbon fibers 11 and the CNTs 17 is maintained, and the carbon fibers 11 and the CNTs 17 are cross-linked around the contact portion where carbon fibers 11 and the CNTs 17 are in direct contact with each other by the first sizing agent 15, as illustrated in Fig. 4, the first sizing agent 15 may not wrap and cover the CNTs 17.

Note that, in the structure 14, a gap (mesh) 19 surrounded by the plurality of CNTs 17 is formed by the CNTs 17. It is preferable that the first sizing agent 15 does not fill up the gap 19 so as not to block impregnation with the matrix resin into the structure 14. It is preferable that a mass ratio (Rm) of the sizing agent which is a ratio of the mass of the first sizing agent 15 adhered to the structure 14 to the mass of the carbon fibers 11 is preferably set to a range of 0.6% to 1.1% so as not to fill up the gap 19.

The mass of the carbon fibers 11 per unit length increases or decreases depending on the size of the diameter of the carbon fibers 11, and the mass of the first sizing agent 15 suitable for adhesion to the structure 14 also increases or decreases. However, typically, in a range of the diameter of the carbon fibers 11 used in a carbon fiber-reinforced molded article, a variation of the mass ratio Rm of the sizing agent which is suitable for a variation of the diameter of the carbon fibers 11 is minute, and even in carbon fibers 11 having any diameter, filling of the gap 19 can be prevented within the above-described range of the mass ratio Rm of the sizing agent. When the mass ratio Rm of the sizing agent to the carbon fibers 11 having a diameter in a range of 4 µm to 8 µm is 0.6% to 1.1%, it is confirmed that the gap 19 is not filled up. When the structure 14 is impregnated with the matrix resin and the matrix resin is cured, the matrix resin is hard to be peeled off from the structure 14 and further from the carbon fibers 11, and thus there is an advantage in that mechanical strength is improved.

The CNTs 17 adhered to the carbon fibers 11 have a bent shape. The bent shape of the CNTs 17 is obtained because a bent portion is provided due to existence of a five-membered ring, a seven-membered ring, and the like of carbon in a graphite structure of the CNTs 17. The bent shape is a shape from which the CNTs 17 can be evaluated to be curved, bent, or the like from observation with a SEM. For example, the bent shape of the CNTs 17 represents that the bent portion exists at least at one site per an average length of a use range of the CNTs 17 to be described later. The CNTs 17 having the bent shape even in a case where the bent shape is long, adhere to the surfaces of the carbon fibers 11 which are curved surfaces in various postures. In addition, the CNTs 17 having the bent shape are likely to form a space (gap) between the surfaces of the carbon fibers 11 to which the CNTs 17 adhere, or between the adhered CNTs 17, and another CNT 17 enters the space. According to this, when using the CNTs 17 having the bent shape, the number of the CNTs 17 adhered to the carbon fibers 11 (the number of the CNTs 17 forming the structure 14) further increases in comparison to the case of using CNTs having a shape with high linearity.

The length of the CNTs 17 is preferably within a range of 0.1 µm to 10 µm. When the length is 0.1 µm or longer, the CNTs 17 can more reliably form the structure 14 in which the CNTs 17 are entangled and come into direct contact with each other or are directly connected to each other, and it is possible to more reliably form the space which the other CNT 17 enters as described above. In addition, when the length of the CNTs 17 is 10 µm or less, the CNTs 17 do not adhere between the carbon fibers 11. That is, as described above, the CNT 17 that is contained in the structure 14 provided in one carbon fiber 11 is not contained in the structure 14 provided in another carbon fiber 11.

The length of the CNTs 17 is more preferably within a range of 0.2 µm to 5 µm. When the length of the CNTs 17 is 0.2 µm or longer, the number of the CNTs 17 adhered increases and the structure 14 can be made thick. When the length is 5 µm or less, when causing the CNTs 17 to adhere to the carbon fibers 11, the CNTs 17 are less likely to aggregate, and the CNTs 17 are likely to be more evenly dispersed. As a result, the CNTs 17 more evenly adhere to the carbon fibers 11.

Note that, with regard to the CNTs adhered to the carbon fibers 11, mixing-in of CNTs with high linearity or mixing-in of CNTs having a length out of the above-described range are not excluded. For example, even in a case where mixing-in occurs, since the CNTs with high linearity enter a space formed by the CNTs 17, it is possible to increase the number of the CNTs adhered to the carbon fibers 11.

It is preferable that an average diameter of the CNTs 17 is within a range of 0.5 nm to 30 nm, and more preferably a range of 3 nm to 10 nm. When the diameter is 30 nm or less, the CNTs 17 are very flexible and are likely to adhere to the carbon fibers 11 along the surfaces thereof, and are likely to be fixed to the carbon fibers 11 in a state of being entangled with other CNTs 17. In addition to this, formation of the structure 14 becomes more reliable. In addition, when the diameter is 10 nm or less, bonding between the CNTs 17 constituting the structure 14 becomes strong. Note that, the diameter of the CNTs 17 is set as a value measured by using a transmission electron microscope (TEM) photograph. The CNTs 17 may be a single-layer structure or a multi-layer structure, but the multi-layer structure is preferable.

As described above, when the CNTs 17 are set to have the bent shape, it is possible to further increase the number of the CNTs 17 adhered to the carbon fibers 11 in comparison to the case of using CNTs with high linearity, and it is possible to increase the thickness of the structure 14. In addition, the structure 14 in which the CNTs 17 are knitted like a non-woven fabric fiber is formed. As a result, it is a matter of course that the mechanical strength is further raised, and in a case where an external force is applied to the carbon fiber-reinforced molded article and the carbon fibers 11 are displaced, a constraining effect due to the structure 14 is large, and thus the elastic modulus can be further raised. In addition, a mechanical energy absorbing effect due to the composite region 18 at the periphery of the carbon fibers 11 also increases, and the vibration damping property of the carbon fiber-reinforced molded article can be further enhanced.

As an example of the mechanical strength that is improved, durability against repetitive bending can be exemplified. As described above, in the carbon fiber-reinforced molded article using the composite material 10 in which the CNTs 17 adhere to the surfaces of the carbon fibers 11, it is considered that the durability against the repetitive bending can be enhanced by a peeling strength improving effect due to inclusion of the structure 14, and the mechanical energy absorbing effect due to the composite region 18. The peeling strength improving effect and the mechanical energy absorbing effect can be further enhanced in proportion to an increase in the number of the CNTs 17 adhered to the surfaces of the carbon fibers 11, and thus the durability against the repetitive bending becomes high. The composite material 10 having the above-described properties is suitable as a spring material of a coil spring or a leaf spring, or the like to which a load is repetitively applied, and thus the carbon fiber-reinforced molded article containing the composite material 10 is applicable to various springs such as the coil spring and the leaf spring. In addition, when the structure 14 is impregnated with the matrix resin and the matrix resin is cured, interface adhesion strength between the carbon fibers 11 and the matrix resin is enhanced, and thus in the carbon fiber-reinforced molded article, tensile strength is improved.

The number of the CNTs 17 adhered to the carbon fibers 11 can be evaluated with the thickness of the structure 14 (a length in a diameter direction of the carbon fibers 11). For example, the thickness of each portion of the structure 14 can be measured as follows. Specifically, a part of the structure 14 on the surfaces of the carbon fibers 11 is bonded to a cellophane tape or the like and is peeled off, and a cross-section of the structure 14 remaining on the surfaces of the carbon fibers 11 is measured with a SEM or the like to acquire the thickness. In order to almost uniformly cover a measurement range of a predetermined length along a fiber axis direction of the carbon fibers 11, the thickness of the structure 14 is measured at ten sites in the measurement range, and an average thereof is set as the thickness of the structure 14. For example, the length of the measurement range is set to a length that is five times an upper limit of a range of the length of the CNTs 17 described above.

The thickness (average) of the structure 14 which is obtained as described above is preferably within a range of 10 nm to 300 nm, more preferably within a range of 15 nm to 200 nm, and still more preferably 50 nm to 200 nm. When the thickness of the structure 14 is 200 nm or less, an impregnation property with a resin between the carbon fibers 11 is satisfactory.

In addition, an adhesion state of the CNTs 17 to the carbon fibers 11 can be evaluated by employing a CNT mass ratio Rc that is a mass ratio of the CNTs 17 adhered to the carbon fibers 11 with respect to the CNT composite fiber. When the mass (hereinafter, referred to as "CF mass") of only the carbon fibers 11 having a predetermined length is set as Wa, and the mass (hereinafter, referred to as "CNT mass") of the CNTs 17 adhered to the carbon fibers 11 is set as Wb, the CNT mass ratio Rc is obtained as "Rc = Wb / (Wa + Wb)".

It is preferable that the CNTs 17 uniformly adhere to the carbon fibers 11, and it is preferable that the CNTs 17 adhere to the carbon fibers 11 to cover the surfaces thereof. The adhesion state including uniformity of the CNTs 17 with respect to the carbon fiber 11 is observed with a SEM, and an obtained image can be visually evaluated. In this case, it is preferable to make an evaluation by observing a plurality of sites (for example, 10 sites) to approximately evenly cover a range of a predetermined length (for example, a range of 1 cm, 10 cm, or 1 m) of the carbon fibers 11 along the fiber axis direction.

In addition, adhesion uniformity of the CNTs 17 to the carbon fibers 11 can be evaluated by using the above-described CNT mass ratio Rc. The CNT mass ratio Rc is preferably 0.001 to 0.008. When CNT mass ratio Rc is 0.001 or more, in a case of obtaining a carbon fiber-reinforced molded article, a large constraining effect due to the structure 14 and a large effect of absorbing mechanical energy in the composite region 18 can be reliably obtained, and the properties derived from the CNTs are improved. When the CNT mass ratio Rc is 0.008 or less, resin impregnation of the structure 14 with the matrix resin becomes reliable. In addition, the CNT mass ratio Rc is more preferably 0.002 to 0.006. When the CNT mass ratio Rc is 0.002 or more, the structure 14 (CNTs 17) more reliably functions between almost all carbon fibers 11. When the CNT mass ratio Rc is 0.006 or less, resin impregnation of the structure 14 with the matrix resin becomes reliable, and even in a case where a ratio of the matrix resin in the carbon fiber-reinforced molded article is low, the structure 14 more reliably functions. Furthermore, even in a case where the ratio of the matrix resin is low, the CNTs 17 exists in a resin between carbon fibers at a high concentration, and thus toughness strength can be improved due to a reinforcing effect of the CNTs 17.

It is preferable that a standard deviation s of respective CNT mass ratios Rc of ten measurement sites set within a range (hereinafter, referred to as "evaluation range") of 1 m in the length of one piece of the carbon fibers 11 is 0.0005 or less, and more preferably 0.0002 or less. In addition, a ratio of the standard deviation s to an average of the CNT mass ratio Rc is preferably 40% or less, and more preferably 15% or less. It is preferable that the ten measurement sites are set to almost uniformly cover the evaluation range. The standard deviation s becomes an index of a variation in the adhesion number (adhesion amount) of the CNTs 17 adhered to the carbon fibers 11 and the thickness of the structure 14, and the smaller the variation is, the smaller a value of the standard deviation is. Accordingly, as the standard deviation s is smaller, it is more preferable. The variation in the adhesion number of the CNTs 17 and the thickness of the structure 14 is exhibited as a difference of properties derived from the CNTs in the composite material 10 and the carbon fiber-reinforced molded article using the composite material 10. When the standard deviation s is 0.0005 or less, the properties derived from the CNTs 17 in the composite material 10 and the carbon fiber-reinforced molded article are more reliably exhibited, and when the standard deviation s is 0.0002 or less, the properties derived from the CNTs 17 are sufficiently and reliably exhibited. Note that, the standard deviation s is obtained by Expression (2). A value n in Expression (2) represents the number of measurement sites (n = 10 in this example), a value Ri represents the CNT mass ratio Rc of the measurement sites, and a value Ra represents an average of the CNT mass ratio Rc.

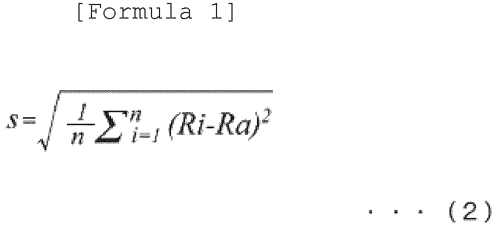

### [Measurement of CNT Mass Ratio]

The CNT mass ratio Rc is obtained as follows by cutting the carbon fiber bundle 12 (for example, approximately 12000 CNT composite fibers) by approximately 1 m with respect to a measurement portion where the CNT mass ratio Rc is desired to be obtained as a measurement sample.
(1) The measurement sample is put into a solution (hereinafter, referred to as "measurement solution") that becomes a dispersion medium of the CNTs 17. As the measurement solution, for example, a solution obtained by putting a dispersing agent into NMP (N-methyl-2-pyrrolidone, CAS registration number: 872-50-4) is used. The dispersing agent is added to the measurement solution in order for the CNTs 17 not to re-adhere to the carbon fibers 11, but may not be added. For example, the amount of the measurement solution is 100 ml with respect to 10 g of measurement sample.
(2) A difference between the mass of the measurement solution before putting the measurement sample and the mass of the measurement solution including the measurement sample after being put is measured, and the difference is set as the mass of the measurement sample, that is, the sum (Wa + Wb) of the CF mass Wa of the carbon fibers 11 and the CNT mass Wb of the CNTs 17 adhered to the carbon fibers 11.
(3) The measurement solution including the measurement sample is heated to completely separate the CNTs 17 adhered to the carbon fibers 11 from the carbon fibers 11 and to disperse the CNTs 17 in the measurement solution.
(4) Absorbance (transmittance) of the measurement solution in which the CNTs 17 are dispersed is measured by using an absorption photometer. The concentration of the CNTs 17 in the measurement solution (hereinafter, referred to as "CNT concentration") is obtained from a measurement result by the absorption photometer and a calibration curve created in advance. The CNT concentration is a mass percent concentration given as "C = W2 / (W1 + W2)" when a value of the CNT concentration is set as C, the mass of the measurement solution is set as W1, and the mass of the CNTs 17 included in the measurement solution is set as W2.
(5) The CNT mass (Wb) of the CNTs 17 in the measurement solution is obtained from the obtained CNT concentration and the mass of the measurement solution before putting the measurement sample.
(6) The CNT mass ratio Rc (= Wb / (Wa + Wb) is calculated from the sum (Wa + Wb) of the CF mass Wa and the CNT mass Wb which is obtained in (2), and the CNT mass (Wb) of the CNTs 17.

In measurement of the absorbance, a spectrophotometer (for example, SolidSpec-3700 manufactured by Shimadzu Corporation, or the like) can be used, and as a measurement wavelength, for example, 500 nm or the like may be used. In addition, in the measurement, the measurement solution is preferably accommodated in a quartz cell. In addition, absorbance of a dispersion medium that does not contain impurities other than the dispersion agent may be measured as a reference, and the concentration C of the CNTs 17 may be obtained by using a difference between the absorbance of the measurement solution in which the CNTs 17 are dispersed and the reference. Note that, in the measurement of the CNT mass ratio Rc, a carbon fiber bundle obtained by removing the first sizing agent 15 from the carbon fiber bundle 12 is used. However, in a case where the mass of the first sizing agent 15 to the mass of the carbon fibers 11 is approximately 1/100, presence or absence of adhesion of the first sizing agent 15, that is, the mass of the first sizing agent 15 substantially has no influence on a preferable range of the CNT mass ratio Rc. Accordingly, in this case, the mass of the CNT composite fiber to which the first sizing agent 15 adheres can be regarded as the sum (Wa + Wb) of the CF mass Wa and the CNT mass Wb.

In a case of evaluating uniformity by using the CNT mass ratio Rc, 10 sites of measurement portions are set to almost uniformly cover an evaluation range (for example, a length of 1 m) of the carbon fiber bundle 12 to be evaluated. With regard to the 10 sites of measurement portions, both ends of the evaluation range and eight sites between the ends are set, and the CNT mass ratio Rc is obtained with respect to each of the measurement portions in the above-described procedure.

### [Measurement of Mass Ratio of Sizing Agent]

In measurement of a mass ratio Rm of the sizing agent, for example, three CNT composite fibers are cut out from the carbon fiber bundle 12 prepared by causing the first sizing agent 15 to adhere to the structure 14 of each of the carbon fibers 11 and are set as a measurement sample. The mass ratio Rm is obtained as follows. For example, a length of the CNT composite fibers cut out as a measurement sample is set to 5 m. Note that, the number and the length of the CNT composite fibers set as the measurement sample are not limited thereof.

(1) The measurement sample is put into a measurement solution of the CNTs 17. Conditions of the measurement solution and the dispersion medium are the same as in measurement of the CNT mass ratio Rc described above.
(2) A difference between the mass of the measurement solution before putting the measurement sample, and the mass of the measurement solution including the measurement sample after being put is measured, and the difference is set as the mass of the measurement sample, that is, the sum (Wa + Wb + Wc) of the CF mass Wa of the carbon fibers 11, the CNT mass Wb of the CNTs 17 adhered to the carbon fibers 11, and a sizing agent mass Wc of the first sizing agent 15 adhered to the CNTs 17.
(3) The measurement solution including the measurement sample is heated to completely separate the CNTs 17 adhered to the carbon fibers 11 from the carbon fibers 11 and to disperse the CNTs 17 in the measurement solution.
(4) Absorbance of the measurement solution in which the CNTs 17 are dispersed is measured by using an absorption photometer in a similar manner as in the case of measuring the CNT mass ratio Rc. A CNT concentration of the CNTs 17 in the measurement solution is obtained from the absorbance and a calibration curve created in advance. The CNT mass Wb in the measurement solution is obtained from the obtained CNT concentration and the mass of the measurement solution before putting the measurement sample.
(5) The CF mass Wa is specified from a catalog value of the carbon fibers 11 (raw fiber) which are used.
(6) A difference obtained by subtracting the CF mass Wa obtained in (5) and the CNT mass Wb obtained in (4) from the mass (Wa + Wb + Wc) of the measurement sample, and the difference is set as the sizing agent mass Wc of the first sizing agent 15 applied to the measurement sample.
(7) The mass ratio Rm (= (Wc / Wa) × 100%) of the sizing agent is calculated from the CF mass Wa obtained in (5) and the sizing agent mass WC obtained in (6).

Note that, in the measurement of the mass ratio Rm of the sizing agent described above, in a case of specifying the CF mass Wa from the catalog value of the carbon fibers 11 (raw fiber), the mass of the carbon fibers 11 (raw fiber) to which the sizing agent does not adhere is specified. The sizing agent stated here is a sizing agent that adheres to the surface of the carbon fibers 11 (raw fiber) for preventing entanglement or the like between the carbon fibers 11 (raw fiber), and is different from the first sizing agent 15. However, the mass of the sizing agent for preventing entanglement or the like is typically approximately 1/100 of the CF mass Wa of the carbon fibers 11, and in this case, present or absence of adhesion of the sizing agent substantially does not have an influence on a preferable range of the mass ratio Rm of the sizing agent. Accordingly, in this case, the mass of the carbon fibers 11 to which the sizing agent adheres can be regarded as the CF mass Wa when obtaining the mass ratio Rm of the sizing agent.

In addition, the specifying of the CF mass Wa is not limited to specifying from the catalog value. For example, the mass of the carbon fibers 11 after separation of the CNTs 17 may be measured and set as the CF mass Wa. Furthermore, the CF mass Wa may be specified by measuring a mass with respect to a carbon fiber which is the same kind as the carbon fibers 11 used in the CNT composite fiber set as the measurement sample and to which the CNTs 17 do not adhere.

### [Method for Producing Composite Material]

In order to form the structure 14 by causing the CNTs 17 to adhere to each of the carbon fibers 11 in the carbon fiber bundle 12, the carbon fiber bundle 12 is immersed in a CNT isolated dispersion (hereinafter, simply referred to as "dispersion") in which the CNTs 17 are isolated and dispersed, and mechanical energy is applied to the dispersion. The term "isolated and dispersed" represents a state in which the CNTs 17 are physically separated one by one and are dispersed in a dispersion medium without entanglement, and a state in which a ratio of an aggregate in which two or more CNTs 17 are aggregated in a bundle form is 10% or less. Here, when the ratio of the aggregate is 10% or more, aggregation of the CNTs 17 in the dispersion medium is promoted, and adhesion of the CNTs 17 to the carbon fibers 11 is inhibited.

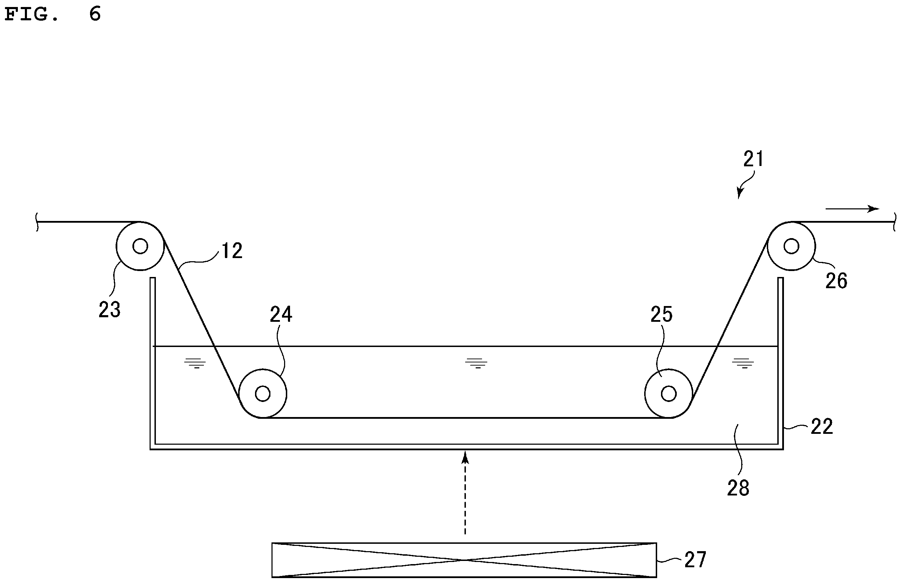

As illustrated in Fig. 6, as an example, an adhesion device 21 includes a CNT adhesion tank 22, guide rollers 23 to 26, an ultrasonic wave generator 27, a traveling mechanism (not illustrated) that causes the carbon fiber bundle 12 to travel at a constant speed, and the like. A dispersion 28 is stored in the CNT adhesion tank 22. The ultrasonic wave generator 27 applies ultrasonic waves to the dispersion 28 in the CNT adhesion tank 22 from a lower side of the CNT adhesion tank 22.

The carbon fiber bundle 12 having a long length (for example, approximately 100 m) in which the structure 14 is not formed is continuously supplied to the adhesion device 21. The carbon fiber bundle 12 that is supplied is wound around the guide rollers 23 to 26 in this order, and travels at a constant speed by the traveling mechanism. The carbon fiber bundle 12 in which the sizing agent does not adhere to the carbon fibers 11 is supplied to the adhesion device 21. Note that, the sizing agent stated here prevents entanglement of the carbon fibers 11 or the like as described above.

The carbon fiber bundle 12 is wound around the guide rollers 23 to 26 in an opened state. Appropriate tension acts on the carbon fiber bundle 12 wound around the guide rollers 23 to 26, and thus the carbon fibers 11 are less likely to be entangled with each other. It is preferable that the winding of the carbon fiber bundle 12 around the guide rollers 24 to 26 is set to a smaller winding angle (90° or less).

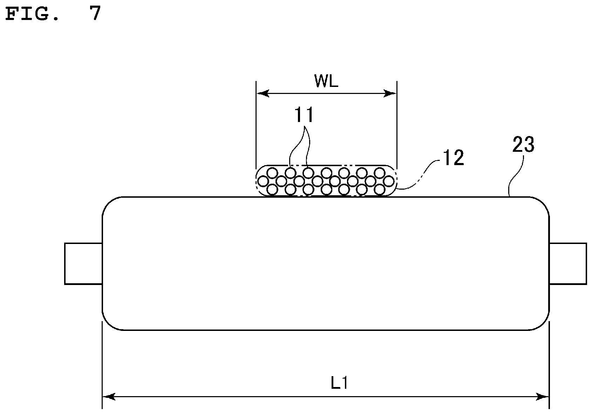

Any of the guide rollers 23 to 26 is a flat roller. As illustrated in Fig. 7, a roller length (a length in an axial direction) L1 of the guide roller 23 is set to be sufficiently larger than a width WL of the carbon fiber bundle 12 that is opened. With regard to the guide rollers 24 to 26, as in the guide roller 23, the roller length is set to be sufficiently larger than the width WL of the opened carbon fiber bundle 12. For example, the guide rollers 23 to 26 have the same size, and the roller length L1 is set to 100 mm, and a diameter (external diameter) of the rollers is set to 50 mm. In the opened carbon fiber bundle 12, a plurality of the carbon fibers 11 is aligned in the thickness direction (a diameter direction of the guide rollers).

Among the guide rollers 23 to 26, the guide rollers 24 and 25 are disposed in the CNT adhesion tank 22. According to this, the carbon fiber bundle 12 linearly travels between the guide rollers 24 and 25 in the dispersion 28 at a constant depth. A traveling speed of the carbon fiber bundle 12 is preferably set within a range of 0.5 to 100 m/minute. The higher the traveling speed of the carbon fiber bundle 12 is, the further productivity is improved. The lower the traveling speed is, the more effective for uniform adhesion of the CNTs 17, and more effective for suppression of entanglement of the carbon fibers 11. In addition, the less entanglement between the carbon fibers 11 is, the further uniformity of adhesion of the CNTs 17 to the carbon fibers 11 is raised. When the traveling speed of the carbon fiber bundle 12 is 100 m/minute or less, entanglement between the carbon fibers 11 is more effectively suppressed, and adhesion uniformity of the CNTs 17 can be further raised. In addition, the traveling speed of the carbon fiber bundle 12 is more preferably set within a range of 5 to 50 m/minute.

The ultrasonic wave generator 27 applies ultrasonic vibration as mechanical energy to the dispersion 28. According to this, in the dispersion 28, a reversible reaction state in which a dispersion state in which the CNTs 17 are dispersed and an aggregation state in which the CNTs 17 are aggregated vary alternately is formed. When the carbon fiber bundle 12 is caused to pass through the dispersion 28 that is in the reversible reaction state, when transitioning from the dispersion state to the aggregation state, the CNTs 17 adhere to the carbon fibers 11 due to Van der Walls force. The mass of the carbon fibers 11 is as large as 100000 or more times the mass of the CNTs 17, energy necessary for detachment of the adhered CNTs 17 is more than energy due to the ultrasonic vibration. According to this, the CNTs 17 adhered once to the carbon fibers 11 in the dispersion 28 are not peeled off from the carbon fibers 11 by the ultrasonic vibration after adhesion. Note that, since the mass is very small, the dispersion state and the aggregation state alternately vary between the CNTs 17 due to the ultrasonic vibration.

When transition from the dispersion state to the aggregation state is repetitively performed, a plurality of CNTs 17 adhere to each of the carbon fibers 11, and the structure 14 is formed. As described above, when using the CNTs 17 having a bent shape, other CNTs 17 enter a space formed between the CNTs 17 and the surfaces of the carbon fibers 11 to which the CNTs adhere, between the adhered CNTs 17, or the like, and thus more CNTs 17 adhere to the carbon fibers 11 and the structure 14 is formed.

A frequency of the ultrasonic vibration applied to the dispersion 28 is preferably 40 to 950 kHz. When the frequency is 40 kHz or higher, entanglement between the carbon fibers 11 in the carbon fiber bundle 12 is suppressed. In addition, when the frequency is 950 kHz or lower, the CNTs 17 adhere to the carbon fibers 11 in a satisfactory manner. In order to further reduce entanglement of the carbon fibers 11, the frequency of the ultrasonic vibration is preferably 100 kHz or higher.

In addition, the present inventors found that the number of the CNTs 17 adhered to the carbon fibers 11 becomes almost the maximum while securing uniformity of adhesion of the CNTs 17 to the carbon fibers 11 when the number of times of transition from the dispersion state to the aggregation state in the CNTs 17 reaches 100000 or more times. Note that, the maximum value of the number of the CNTs 17 adhered varies in accordance with a CNT concentration of the dispersion 28, and increases as the CNT concentration of the dispersion 28 is higher. However, when the CNT concentration of the dispersion 28 becomes a high concentration at which the CNTs 17 cannot take a dispersion state when applying the ultrasonic vibration, adhesion of the CNTs 17 to the carbon fibers 11 cannot be performed.

According to this, it is preferable to determine the traveling speed of the carbon fiber bundle 12, a traveling distance of the carbon fiber bundle 12 in the dispersion 28 (an interval between the guide rollers 24 and 25), and the frequency of the ultrasonic vibration that is applied to the dispersion 28 so that the length of a period during which the carbon fiber bundle 12 is traveling in the dispersion 28, that is, time (hereinafter, referred to as "immersion time") for which the carbon fiber bundle 12 is traveling between the guide rollers 24 and 25 becomes 100000 or more times a cycle of the ultrasonic vibration applied to the dispersion 28. That is, it is preferable to satisfy "Ts ≥ 100000/fs", where fs (Hz) represents the frequency of the ultrasonic vibration, and Ts (second) represents the immersion times. For example, when the frequency of the ultrasonic vibration is 100 kHz and the distance along which the carbon fiber bundle 12 travels in the dispersion 28 is 0.1 m, the traveling speed of the carbon fiber bundle 12 can be set to 6 m/minute or less. In addition, even in a case where the carbon fiber bundle 12 is immersed in the dispersion 28 in a plurality of times in a division manner, when a total number of immersion times is set to 100000 or more times the cycle of the ultrasonic vibration, the number of the CNTs 17 adhered can be almost the maximum.

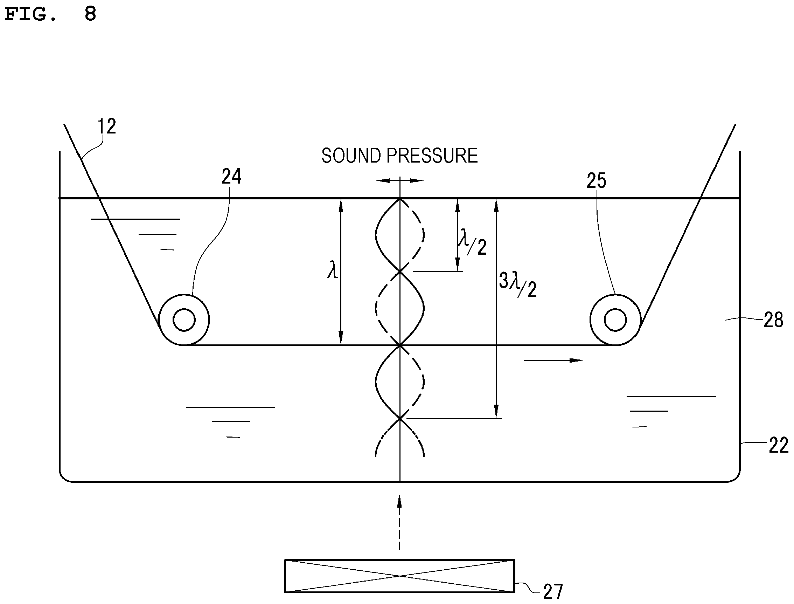

As schematically illustrated in Fig. 8, a standing wave in which a distribution of a sound pressure (amplitude) is determined occurs in the dispersion 28 inside the CNT adhesion tank 22 due to the ultrasonic vibration applied from the ultrasonic wave generator 27. In the adhesion device 21, positions of the guide rollers 24 and 25 in a depth direction are adjusted so that the carbon fiber bundle 12 travels in the dispersion 28 at a depth at which a standing wave node of the ultrasonic vibration, that is, a sound pressure becomes the minimum. Accordingly, a depth from a liquid surface of the dispersion 28 at which the carbon fiber bundle 12 travels in the dispersion 28 is set as D, a wavelength of a standing wave of ultrasonic vibration that occurs in the dispersion 28 is set as λ, and n is set as an integer of 1 or more, these values are determined to satisfy a relationship of "D = n·(λ/2)". Note that, the wavelength λ of the standing wave can be obtained on the basis of a sound speed in the dispersion 28 and a frequency of the ultrasonic vibration applied from the ultrasonic wave generator 27.

As described above, through adjustment of the depth of the carbon fiber bundle 12 that travels in the dispersion 28, vibration of the carbon fibers 11 due to the sound pressure is suppressed, thread disorder due to thread sagging can be prevented, scraping between the carbon fibers 11 or between the CNTs 14 adhered to surfaces of the carbon fibers 11 can be suppressed, and the structure 14 having a large thickness can be formed. In addition, since scraping can be suppressed, even when the thickness of the structure 14 is large, a variation in CNT mass ratio Rc can be suppressed, and the above-described standard deviation s decreases. Note that, the depth at which the carbon fiber bundle 12 travels in the dispersion 28 may slightly deviate from the standing wave node, and in this case, the depth is preferably set within a range (n·λ/2 - λ/8 ≤ D ≤ n·λ/2 + λ/8) that is equal to or larger than n·λ/2 - λ/8 and equal to or less than n·λ/2 + λ/8. According to this, it is possible to set the thread disorder of the carbon fibers 11 due to thread sagging in a permissible range.

For example, the dispersion 28 is prepared as follows. A long CNT (hereinafter, referred to as "material CNT") is added to a dispersion medium, the material CNT is cut by a homogenizer, a shearing force, an ultrasonic disperse, or the like to obtain the CNTs 17 having a desired length, and to realize dispersion uniformity of the CNTs 17.

As the dispersion medium, water, alcohols such as ethanol, methanol and isopropyl alcohol, organic solvents such as toluene, acetone, tetrahydrofuran (THF), methyl ethyl ketone (MEK), hexane, normal hexane, ethyl ether, xylene, methyl acetate, and ethyl acetate, and a mixed solution containing these materials in any ratios can be used. The dispersion 28 does not contain a dispersing agent and adhesive.

A material CNT that becomes a source of the CNTs 17 having a bent shape as described above may also have a bent shape. In the material CNT, it is preferable that diameters of individual material CNTs are equal. With regard to the material CNT, even when a length of each CNT generated from cutting is long, it is preferable that the CNT can be isolated and dispersed. According to this, the dispersion 28 in which the CNTs 17 satisfying the above-described length condition are isolated and dispersed is easily obtained.

In the composite material 10 in this example, as described above, since CNTs having the bent shape as the CNTs 17 are caused to adhere, other CNT 17 enters a space formed between the CNTs 17 and the surfaces of the carbon fibers 11 to which the CNTs 17 adhere, between the adhered CNTs 17, or the like. According to this, more CNTs 17 adhere to the carbon fibers 11. In addition, the CNTs 17 strongly adhere to the carbon fibers 11 and the structure 14 is formed, and thus the CNTs 17 are less likely to be peeled off from the carbon fibers 11. In addition, in the carbon fiber-reinforced molded article manufactured by using the composite material 10, the properties are further enhanced due to the CNTs.

A concentration of the CNTs 17 in the dispersion 28 is preferably in a range of 0.003 wt% to 3 wt%. The concentration of the CNTs 17 in the dispersion 28 is more preferably 0.005 wt% to 0.5 wt%.

The carbon fiber bundle 12 is dried after being pulled out from the dispersion 28. The first sizing treatment is performed on the dried carbon fiber bundle 12 to apply the first sizing agent 15 to the structure 14.

The first sizing treatment includes a process of applying a first sizing treatment solution to (bringing the first sizing treatment solution into contact with) the dried carbon fiber bundle 12, and a drying process. The first sizing treatment solution can be prepared by dissolving a carbodiimide compound in a solvent. As the solvent that dissolves the carbodiimide compound, water, alcohol, ketones, a mixture thereof, and the like can be used.

In the application of the first sizing treatment solution, any method such as a method of immersing the carbon fiber bundle 12 in a liquid tank accommodating the first sizing treatment solution, a method of spraying the first sizing treatment solution to the carbon fiber bundle 12, and a method of coating the first sizing treatment solution to the carbon fiber bundle 12 may be used. The first sizing treatment solution enters a state of being applied to the surface of the CNTs 17 in a state of maintaining direct contact between the CNTs 17. The lower the viscosity of the first sizing treatment solution, the easier it is to aggregate in the vicinity of a contact portion between the CNTs 17 and in the vicinity of a contact portion between the carbon fiber 11 and the CNTs 17.

In the drying after application of the first sizing treatment solution, the solvent (water in this example) of the first sizing treatment solution is caused to evaporate. As a drying method, a known drying method such as a method in which the carbon fiber bundle 12 to which the first sizing treatment solution is applied is left as is and dried, a method of blowing a gas such as the air to the carbon fiber bundle 12, and a method of heating the carbon fiber bundle 12 can be used, and heating may be used in combination with any of the method of drying the carbon fiber bundle 12 while being left as is and the method of blowing the gas.

In the carbon fiber-reinforced molded article manufactured by using the composite material 10 as described above, the vibration damping property (damping properties) and a variation property of the elastic modulus are further improved in comparison to a carbon fiber-reinforced molded article using a composite material in the related art. With regard to the variation property of the elastic modulus, an increase in the elastic modulus of the carbon fiber-reinforced molded article is suppressed with respect to an increase in a collision speed to the carbon fiber-reinforced molded article.

### [Prepreg]

In Fig. 9, a prepreg 31 includes the CNT composite fiber of the carbon fiber bundle 12, and a non-cured matrix resin 32 impregnated into the carbon fiber bundle 12. The prepreg 31 is formed by impregnating the opened composite material 10 with the matrix resin 32, and is formed in a strip shape on which a plurality of the carbon fibers 11 are arranged in a thickness direction. The matrix resin 32 impregnated into the composite material 10 also impregnates into the structure 14 of each CNT composite fiber in the composite material 10. In the composite material 10, entanglement between the carbon fibers 11 in the carbon fiber bundle 12 substantially does not exist, and thus when producing the prepreg 31, the carbon fibers 11 are likely to spread uniformly. The fiber axis direction of each of the carbon fibers 11 of the prepreg 31 is aligned in the same direction (a direction perpendicular to a paper surface in Fig. 9). The prepreg 31 can be made wide by arranging a plurality of the opened composite materials 10 in a line in a width direction (opened direction).

As the matrix resin 32, various thermosetting resins or thermoplastic resins can be used without particular limitation. Examples of the thermosetting resins include an epoxy resin, a phenol resin, a melamine resin, a urea resin, unsaturated polyester, an alkyd resin, thermosetting polyimide, a cyanate ester resin, a bismaleimide resin, a vinyl ester resin, and the like, and may be a mixture of the resins. In addition, examples of the thermoplastic resins include general-purpose resins such as polyethylene, polypropylene, polyvinyl chloride, polystyrene, an acrylonitrile/styrene (AS) resin, an acrylonitrile/butadiene/styrene (ABS) resin, a methacrylic resin (PMMA or the like), and a thermoplastic epoxy resin, engineering plastics such as polyamide, polyacetal, polyethylene terephthalate, ultrahigh molecular weight polyethylene, polycarbonate, and a phenoxy resin, and super engineering plastics such as polyphenylene sulfide, polyether ether ketone, polyether ketone ketone, liquid crystal polymer, polytetrafluoroethylene, polyetherimide, polyarylate, and polyimide.

### [Carbon fiber-reinforced molded article]

The carbon fiber-reinforced molded article is manufactured by heating and curing the matrix resin 32 while pressing the prepreg 31. When pressing and heating a laminated body obtained by laminating a plurality of sheets of the prepregs 31, a carbon fiber-reinforced molded article in which the laminated body is integrally formed can be also obtained. In this case, a fiber axis direction of the carbon fibers 11 in the laminated body can be set to any direction for every layer corresponding to the prepreg 31. In a carbon fiber-reinforced molded article 34 illustrated in Fig. 10, in a plurality of layers 34a corresponding to the prepreg 31, fiber axis directions of the carbon fibers 11 are orthogonal to each other in upper and lower layers 34a. As a heating and pressing method, a press molding method, an autoclave molding method, a bagging molding method, a sheet winding method, an internal pressure molding method, and the like can be used. In addition, the carbon fiber-reinforced molded article may be prepared directly from the carbon fiber bundle 12 and the matrix resin by a hand lay-up method, a filament winding method, a pultrusion molding method, and the like which do not use the prepreg 31. A volume content rate of the matrix resin 32 is preferably 25% to 35%, and more preferably 15% to 33%.

In the carbon fiber-reinforced molded article using the above-described composite material 10, as schematically illustrated in Fig. 11, due to a cross-linking portion CL in which parts of the composite region 18 between the carbon fibers 11 are fixed to each other, a cross-linking structure in which the carbon fibers 11 are cross-linked is provided. As described above, the composite region 18 is a region formed from the structure 14 and the matrix resin that is impregnated into the structure 14 and is cured. The composite region 18 has higher hardness in comparison to a cured matrix resin alone, and has high elasticity, that is, a large elastic limit. In addition, the composite region 18 has higher wear resistance in comparison to the matrix resin. Due to mutual bonding of a plurality of the composite regions 18, bonding between the carbon fibers 11 becomes strong, and durability against repetitive bending of the carbon fiber-reinforced molded article using the composite material 10 is improved.

Since the cross-linking structure is formed in a case where a distance between the carbon fibers 11 is short to a certain extent in which a plurality of the structures 14 come into contact with each other, the larger the thickness of the structure 14 is, the more advantageous for causing the more cross-links. However, the thickness of the structure 14 is preferably set to at most 300 nm or less from the viewpoint of securing quality stability by a uniform thickness, the viewpoint of preventing detachment from the carbon fibers 11, and the like. Particularly, the thickness of the structure 14 may be set within a range of 50 nm to 200 nm. In addition, in a case where the carbon fibers 11 are set to a fabric shape, the cross-linking portion CL in which the composite regions 18 are fixed to each other increases, and the effect due to the cross-linking structure increases.

In addition, in the structure 14, since the plurality of CNTs 17 are entangled with each other in a non-woven fabric shape with a certain thickness, the matrix resin applied to the carbon fibers 11 is maintained in a state of being impregnated into the structure 14. Accordingly, in the carbon fiber-reinforced molded article, the matrix resin substantially does not deviate on the surfaces of the carbon fibers 11 regardless of a molding method thereof, and an interval between the carbon fibers becomes uniform. Therefore, a load is uniformly transferred between the carbon fibers through a shear force of the matrix resin, and thus tensile strength of the carbon fiber-reinforced molded article effectively increases.

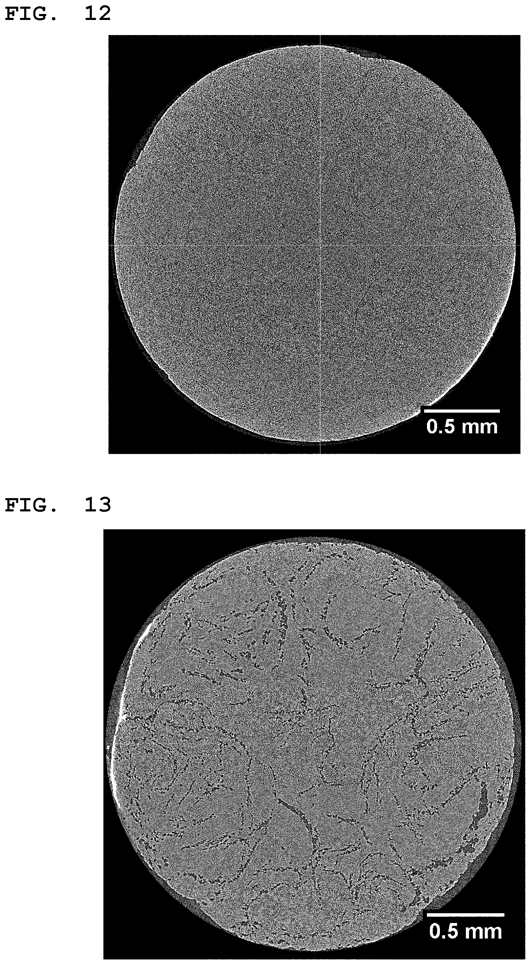

An image of an internal structure of a cylindrical rod prepared as the carbon fiber-reinforced molded article by a pultrusion molding method by using the composite material 10 is shown in Fig. 12, and the image is obtained by X-ray CT. In the rod prepared by using the composite material 10, it can be confirmed that large deviation of the matrix resin and voids do not exist, and a distance between the carbon fibers is approximately uniform over the entirety of the rod. In contrast, in an internal structure of a rod prepared in the same manner by using carbon fibers (raw fiber) to which the CNTs do not adhere, as shown in Fig. 13, it was confirmed that large deviation of the matrix resin and voids occur.

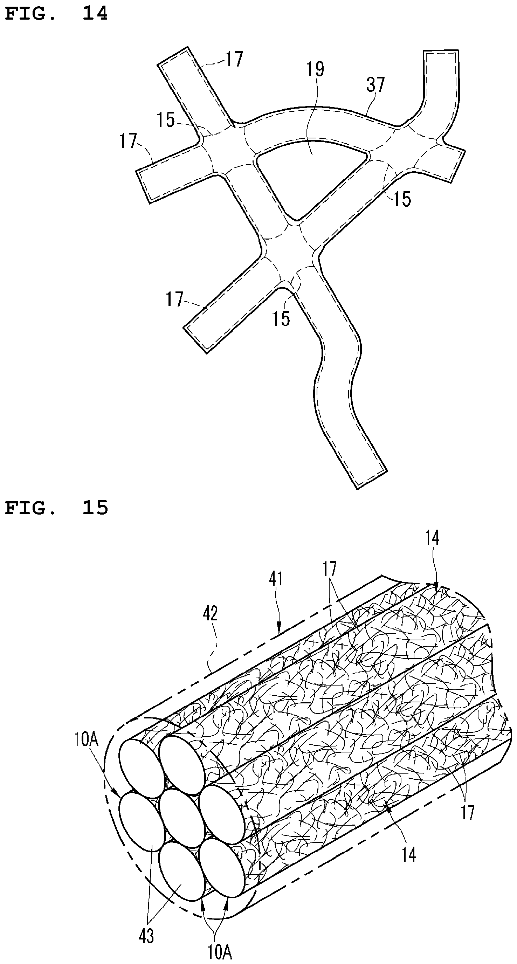

A second sizing agent as a covering agent that covers a surface of CNTs of the structure may be applied to the composite material in addition to the first sizing agent having the carbodiimide-derived structure. As illustrated in Fig. 14, a second sizing agent 37 adheres to the CNTs 17 to cover the surfaces of the CNTs 17 of the structure 14. The second sizing agent 37 is composed of a cured product or a non-cured product of a reactive curing resin, a thermosetting resin, or a thermoplastic resin.

The second sizing agent 37 is applied to the composite material 10 by a second sizing treatment after the first sizing treatment of applying the first sizing agent 15. The second sizing treatment can be performed by a typical method. The carbon fiber bundle 12 (carbon fibers 11) opened after the first sizing treatment is brought into contact with a second sizing treatment solution obtained by dissolving a resin (polymer) serving as the second sizing agent 37 in a dispersion medium so as to apply the second sizing agent 37 to the carbon fiber bundle 12, and then the dispersion medium is caused to evaporate and the second sizing agent 37 is cured or semi-cured. Note that, an emulsion type second sizing treatment solution including a liquid droplet-shaped resin serving as the second sizing agent 37 can also be used.

The resin serving as the second sizing agent 37 is not particularly limited, and various reactive curing resins, thermoplastic resins, thermosetting resins, and the like can be used. Examples of the thermosetting resins include an epoxy resin, a phenolic resin, a melamine resin, a urea resin, unsaturated polyester, an alkyd resin, thermosetting polyimide, a cyanate ester resin, a resin having a reactive group, and the like. In addition, examples of the thermoplastic resins include general-purpose resins such as polyethylene, polypropylene, polystyrene, an acrylonitrile/styrene (AS) resin, an acrylonitrile/butadiene/styrene (ABS) resin, a methacrylic resin (PMMA, or the like), vinyl chloride, and a thermoplastic epoxy resin, engineering plastics such as polyamide, polyacetal, polyethylene terephthalate, ultrahigh molecular weight polyethylene, and polycarbonate, and super engineering plastics such as polyphenylene sulfide, polyether ether ketone, a liquid crystal polymer, polytetrafluoroethylene, polyetherimide, polyarylate, and polyimide.

The second sizing agent 37 covers the surfaces of the CNTs 17 including the first sizing agent 15. In the second sizing agent 37, a portion of the first sizing agent 15 is cross-linked to the first sizing agent 15, but cross-linking does not occur at a portion where the first sizing agent 15 does not exist, and thus viscosity is provided. Due to the second sizing agent 37, a bundling property of a fiber bundle including the plurality of carbon fibers 11 in which the structure 14 is formed is improved. It is preferable that the second sizing agent 37 does not fill up the gap 19 of the structure 14 as in the first sizing agent 15.

An example of a composite material in which CNTs adhere to carbon fibers has been described. However, fibers as a base material are not limited to the carbon fibers, and may be resin fibers such as nylon, polyester, vinylon, and acrylic fiber, a glass fiber, a mineral fiber, or the like. The composite material in which a structure is formed on surfaces of fibers may be set as a fiber impregnated with a resin or the like (hereinafter, referred to as "resin-impregnated fiber"), or can be used for a single yarn constituting a multi-filament or a reinforcement fiber of a fiber-reinforced molded article. The resin-impregnated fiber, the multi-filament, the fiber-reinforced molded article, and the like (hereinafter, these are referred as "a secondary product") have the structure on surfaces of fibers, and thus mechanical properties and the like are improved as in the case of the composite material using the carbon fibers.

An example of the multi-filament is illustrated in Fig. 15. A multi-filament 41 includes a plurality of composite materials 10A and a matrix resin 42. Each of the composite materials 10A includes a fiber 43 such as a nylon resin and a structure 14 formed on a surface of the fiber 43. In addition, a first sizing agent is applied to the structure 14 and a second sizing agent is applied to the structure 14 as necessary as in the first embodiment. Note that, in Fig. 15, the multi-filament 41 constituted by seven pieces of the composite materials 10A is illustrated, but the number of the composite materials 10A is not particularly limited, and the multi-filament 41 may also be constituted by, for example, several thousand to several hundred thousand pieces of the composite material 10A. In addition, one piece of the multi-filament 41 can be obtained by twisting a plurality of the composite materials 10A.

With regard to the fiber 43, a diameter thereof is not particularly limited, but a fiber having a diameter in a range of 5 µm to 100 µm can be preferably used, and a fiber having a diameter in a range of 5 µm to 30 µm can be more preferably used. The length of the fiber 43 is preferably 50 m or longer, more preferably in a range of 100 m to 100000 m, and still more preferably in a range of 100 m to 10000 m. Note that, the composite material 10A may be cut short for use.

As the matrix resin 42, for example, a resin such as polyurethane or an elastomer such as a synthetic rubber can be preferably used. The matrix resin 42 is interposed between the composite materials 10A to bond the composite materials 10A to each other. The matrix resin 42 is impregnated into the structure 14 of each of the composite materials 10, and is cured therein.

In the above-described example, description has been given of a case where the base material is a fiber, but the base material is not limited to the fiber. For example, the base material may be a sheet-shaped or film-shaped article, or a block-shaped article. In addition, CNTs of the structure may not be in direct contact with the surface of the base material.

### [Second Embodiment]

Description will be given of a second embodiment in which a protection treatment is performed to prevent a damage of CNT composite fibers due to friction between the CNT composite fibers. Note that, configurations other than configurations to be described below in detail are the same as in the first embodiments, and the same reference numeral will be given to substantially the same member, and detailed description thereof will be omitted. In addition, description will be given of an example of carbon fibers, but as in the first embodiment, fibers are not limited to the carbon fibers, and may be resin fibers such as nylon, polyester, vinylon, and acrylic fiber, a glass fiber, a mineral fiber, or the like.

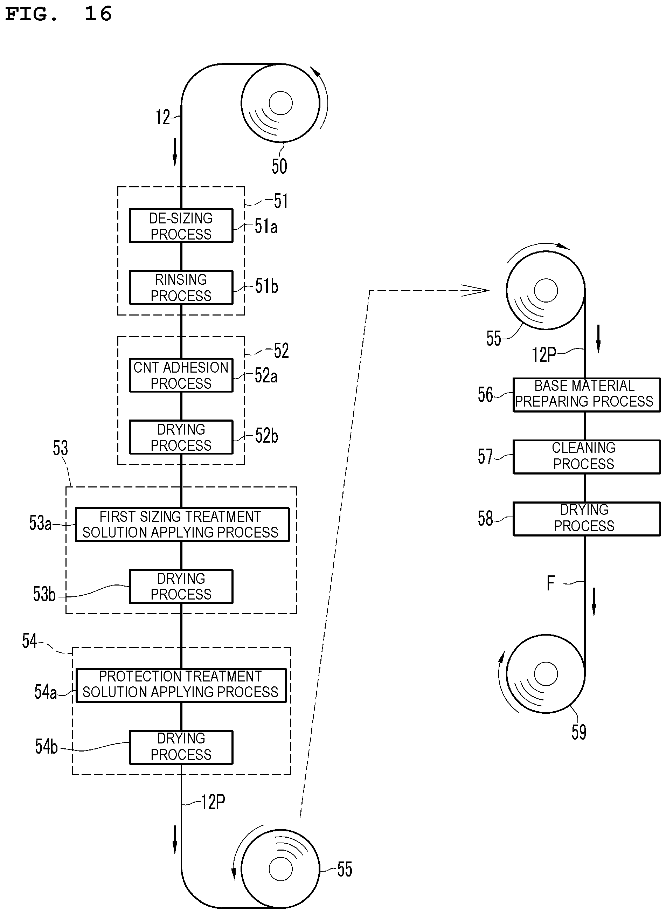

In Fig. 16, for example, the carbon fiber bundle 12 to which the CNTs 17 do not adhere is pulled out from a creel 50, and the carbon fiber bundle 12 is subjected to a de-sizing treatment process 51, a structure forming process 52, a first sizing treatment process 53, and a protection treatment process 54 in this order. For example, the carbon fiber bundle 12 that is a composite material that has undergone the protection treatment process 54 is wound around a reel 55 as a treated fiber bundle 12P. The treated fiber bundle 12P on the reel 55 is pulled out and is provided to a base material preparing process 56. Note that, the treated fiber bundle 12P may be directly provided to the base material preparing process 56 from a drying process 54b without being wound around the reel 55 or the like.

A reinforced fiber base material F is prepared in the base material preparing process 56 by using the treated fiber bundle 12P, the reinforced fiber base material F is subjected to a cleaning process 57 of cleaning the reinforced fiber base material F and a drying process 58 of drying the reinforced fiber base material F after cleaning, the resultant reinforced fiber base material F is wound, for example, around a reel 59. The reinforced fiber base material F is a base material that is formed into a prepreg and a carbon fiber-reinforced molded article by impregnating the reinforced fiber base material F with a matrix resin. Note that, the reinforced fiber base material F may be cut in a sheet shape without being wound.

The de-sizing treatment process 51 is a process of removing a sizing agent for preventing entanglement or the like of the carbon fibers 11 in the carbon fiber bundle 12, and includes a de-sizing process 51a and a rinsing process 51b. For example, the de-sizing process 51a causes the carbon fiber bundle 12 to pass through a solvent to dissolve and remove the sizing agent from surfaces of the carbon fibers 11. Note that, in the de-sizing process 51a, for example, a method of causing the carbon fiber bundle 12 to pass through the inside of a heating furnace heated up to approximately 500°C to remove the sizing agent, and the like may be employed. The rinsing process 51b removes the residue of the sizing agent on the surfaces of the carbon fibers 11 or in the carbon fiber bundle 12 which occurs in the de-sizing process 51a, and a solvent remained in the carbon fiber bundle 12.

The structure forming process 52 is a process of causing the CNTs 17 to adhere to the carbon fibers 11. The structure forming process 52 includes a CNT adhesion process 52a of causing the carbon fiber bundle 12 to pass through the dispersion 28 obtained by adding the CNTs 17 to the dispersion medium so as to cause the CNTs 17 to adhere to the surfaces of the carbon fibers 11, and a drying process 52b of drying the carbon fiber bundle 12 by evaporating the dispersion medium.

In the first sizing treatment process 53, the first sizing agent 15 is applied to the carbon fiber bundle 12 that has undergone the structure forming process 52. The first sizing treatment process 53 includes a first sizing treatment solution applying process 53a of applying a first sizing treatment solution to (bringing the first sizing treatment solution into contact with) the carbon fiber bundle 12, and a drying process 53b of drying the carbon fiber bundle 12 by evaporating a solvent of the first sizing treatment solution.

Details of each treatment in the structure forming process 52 and the first sizing treatment process 53 are the same as in the treatment of causing the CNTs 17 to adhere to the carbon fibers 11 to form the structure 14 and the treatment of applying the first sizing agent 15 in the first embodiment.

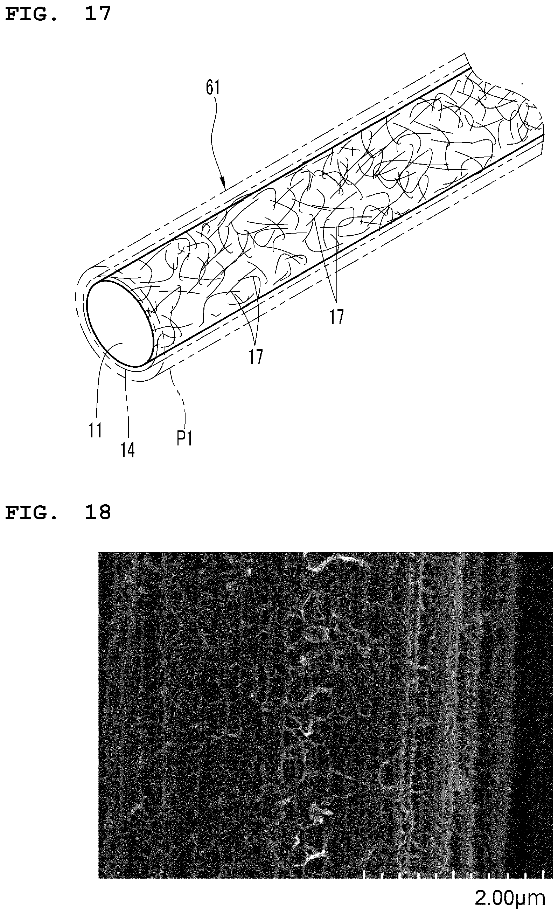

As illustrated in Fig. 17, in the protection treatment process 54, a protection agent P1 is caused to adhere to surfaces of CNT composite fibers 61 which are the carbon fibers 11 in which the structure 14 is formed on surfaces thereof, that is, a surface of the structure 14 to cover the surface. Since the structure 14 is formed, friction between the CNT composite fibers 61 increases, and there is a possibility that damage of the carbon fiber bundle 12 such as occurrence of fluff and occurrence of breakage of the carbon fibers 11 at the time of producing the reinforced fiber base material F may occur due to friction between the CNT composite fibers 61. There is a concern that the damage to the carbon fiber bundle 12 may cause a decrease in strength of a carbon fiber molded article. The protection agent P1 reduces friction between the CNT composite fibers 61, and suppresses the damage to the carbon fiber bundle 12 at the time of producing the reinforced fiber base material F.

The protection agent P1 may adhere to the surface of the structure 14 to a certain extent in which friction between the CNT composite fibers 61 is reduced as described above, and it is not necessary to completely cover the surface of the structure 14. Accordingly, a part of the surface of the structure 14 may be exposed. In addition, the protection agent P1 is removed in the cleaning process 57 after the base material preparing process 56 and before impregnation with a matrix resin. Accordingly, the protection agent P1 may cover the gap 19 of the structure 14 or may enter the inside of the structure 14.

In the example, the protection agent P1 is a water-soluble polymer, i.e., a polymer soluble in water, and is removed from the reinforced fiber base material F by water-cleaning using water as a cleaning liquid after the treated fiber bundle 12P is made into the reinforced fiber base material F.

In the example, the water-soluble polymer is used as the protection agent P1 and water is used as the cleaning liquid, but the protection agent P1 and the cleaning liquid are not limited thereto. For example, a polymer that is dissolved in an organic solvent can be used as the protection agent P1, and the organic solvent that dissolves the protection agent P1 can be used as the cleaning liquid. As described above, a liquid that is used as the cleaning liquid may be selected in correspondence with a polymer that is used as the protection agent P1, or a polymer that is used as the protection agent P1 may be selected in correspondence with the cleaning liquid that is used. Note that, as the cleaning liquid, a cleaning liquid that can selectively remove the protection agent P1 without removing (dissolving) the first sizing agent from the reinforced fiber base material F is used. Note that, when using water as the cleaning liquid as described above, a device configuration becomes simpler and load on the environment is smaller in comparison to a case of using an organic solvent.

As the water-soluble polymer that is the protection agent P1, for example, a known polymer such as polyvinyl alcohol and polyvinyl pyrrolidone may be used. As the protection agent P1, from the viewpoint of solubility in water, that is, removal easiness in water cleaning, a polymer having a lot of hydroxyl groups (-OH) in a molecule like the polyvinyl alcohol is preferable, and examples of the polymer include polycarboxylic acid such as polyvinyl pyrrolidone and polyacrylic acid, and the like in addition to the polyvinyl alcohol. Of course, any polymer having no hydroxyl group like the polyvinyl pyrrolidone may be used as long as the polymer is soluble in water, and examples thereof include polycellulose, sucrose, and the like, but a polymer with a molecular weight of several thousand or greater is preferable. Note that, in a case of applying the first sizing agent 15 having the carbodiimide-derived structure to the CNTs 17, a water-soluble polymer having no carboxyl group (-COOH) is preferably used. The reason for this is because that the carboxyl group strongly bonds to the first sizing agent 15, and removal in the water cleaning tends to be difficult.

The protection treatment process 54 includes a protection treatment solution applying process 54a of applying a protection treatment solution to (bringing the protection treatment solution into contact with) the carbon fiber bundle 12, and a drying process 54b of drying the carbon fiber bundle 12 by evaporating a solvent of the protection treatment solution. The protection treatment solution that is used in the protection treatment solution applying process 54a can be made by dissolving a polymer as the protection agent P1 in water as a solvent.

In the application of the protection treatment solution in the protection treatment solution applying process 54a, any method such as a method of immersing the carbon fiber bundle 12 in a liquid tank accommodating the protection treatment solution, a method of spraying the protection treatment solution to the carbon fiber bundle 12, and a method of coating the protection treatment solution to the carbon fiber bundle 12 may be used. In any case, it is preferable that the carbon fiber bundle 12 is opened, and the protection treatment solution is uniformly and sufficiently applied to a surface of respective CNT composite fibers 61 in the carbon fiber bundle 12. A concentration of the protection treatment solution is preferably set to 1% or less.

In the drying after application of the protection treatment solution, the solvent (water in this example) of the protection treatment solution is caused to evaporate. As a drying method, a known drying method such as a method in which the carbon fiber bundle 12 to which the protection treatment solution is applied is left as is and dried, a method of blowing a gas such as the air to the carbon fiber bundle 12, and a method of heating the carbon fiber bundle 12 can be used, and heating may be used in combination with any of the method of drying the carbon fiber bundle 12 while being left as is and the method of blowing the gas.

In the base material preparing process 56, the reinforced fiber base material F is prepared from the treated fiber bundle 12P as described above. Examples of the reinforced fiber base material F prepared in the base material preparing process 56 include woven fabrics such as plain weave and twill weave obtained by weaving the treated fiber bundle 12P, knit fabrics obtained by knitting the treated fiber bundle 12P, non-crimped fabrics (NCF) obtained by laminating a plurality of fiber layers in which the treated fiber bundle 12P is arranged in one direction and stitching the fiber layers with a stitch thread, a braided article that is represented by a braid and is obtained by braiding the treated fiber bundle 12P, and the like. Fiber directions of the fiber layers in the non-crimped fabrics may be the same as each other or different from each other. In the base material preparing process 56, processing is performed in correspondence with the reinforced fiber base material F to be prepared.

When preparing the reinforced fiber base material F, friction between the CNT composite fibers 61 occurs, for example, in a weaving process in the woven fabrics, and a stitching process in the non-crimped fabrics. However, since the protection agent P1 adheres to the CNT composite fibers 61 of the treated fiber bundle 12P, friction between the CNT composite fibers 61 is reduced, and damages such as fluff and breakage of the carbon fibers 11 are suppressed.

In the cleaning process 57, the reinforced fiber base material F is cleaned with water. According to this, the protection agent P1 adhered to the surfaces of the CNT composite fibers 61 constituting the reinforced fiber base material F is dissolved and removed. In the drying process 58, water adhered to the reinforced fiber base material F is evaporated for drying. As a cleaning method, a dip method in which passing through the inside of a water tank is performed, a shower cleaning method in which passing under a shower is performed, and the like can be used, and when using a hot water instead of cold water, cleaning can be performed with high efficiency. In addition, as a drying method, known drying methods such as a method in which the reinforced fiber base material F is left as is and is dried, a method of blowing a gas such as the air to the reinforced fiber base material F, and a method of heating the reinforced fiber base material F can be used, and heating may be used in combination with any of the method of drying the reinforced fiber base material F while being left as is and the method of blowing the gas.

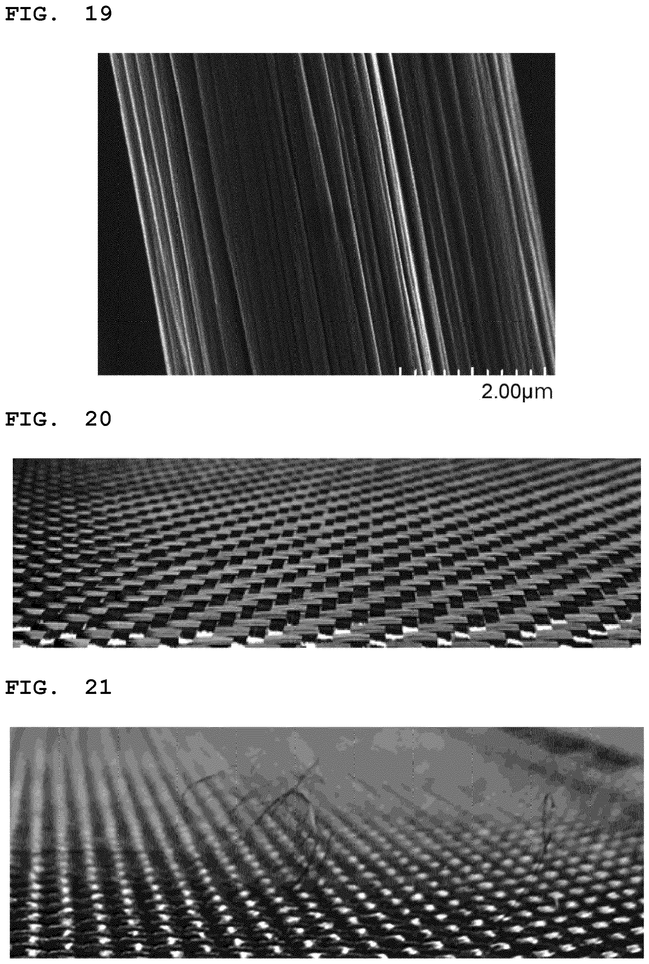

A SEM photograph in Fig. 18 shows a state of the surfaces of the CNT composite fibers 61 that has undergone the protection treatment process 54, and it can be seen that the protection agent P1 covers the surface of the structure 14. In addition, a SEM photograph in Fig. 19 shows a state of the surfaces of the CNT composite fibers 61 after the cleaning process 57, and it can be seen that the protection agent P1 has been removed from the surfaces of the CNT composite fibers 61.

In addition, as shown in a photograph of Fig. 20, it can be seen that fluff does not occur on the surface of the reinforced fiber base material F after cleaning the twill weave prepared by using the treated fiber bundle 12P, and damage of the carbon fiber bundle 12 is suppressed. In contrast, in a reinforced fiber base material F prepared in the same manner by using a carbon fiber bundle 12 to which the protection agent P1 is not applied, as shown in a photograph of Fig. 21, it can be seen that fluff occurs and damage occurs in the carbon fiber bundle 12.

In the above description, description has been made with reference to an example in which the first sizing agent 15 having the carbodiimide-derived structure is used, but even in a case of using a sizing agent having a structure other than the carbodiimide-derived structure as the first sizing agent 15, application of the protection agent P1 is useful for suppressing damage to the carbon fiber bundle 12 when preparing the reinforced fiber base material F.

### Examples

### <Example 1>

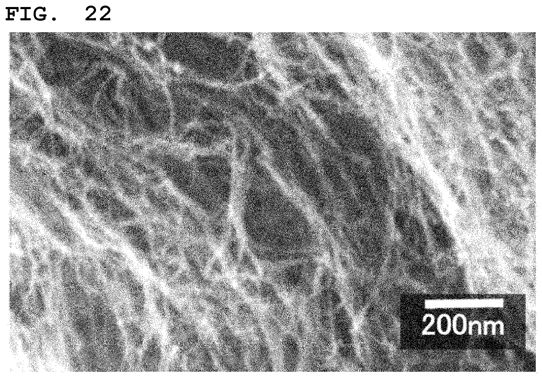

In Example 1, the composite material 10 in which the carbon fibers 11 are set as a base material was prepared by the steps in the first embodiment, a peeling test of the CNTs 17 was performed, and the effect of the first sizing agent 15 was confirmed. The dispersion 28 used when preparing the composite material 10 was prepared by using the material CNT having the bent shape as described above. A SEM photograph of the material CNT used in preparation of the dispersion 28 is shown in Fig. 22. The material CNT was formed in a multi-layer structure, and a diameter was within a range of 3 nm to 10 nm. The material CNT was cleaned with 3:1 mixed acid of sulfuric acid and nitric acid to remove a catalytic residue, and was filtered and dried. The material CNT was added to acetone as the dispersion medium of the dispersion 28, and the material CNT was cut by using an ultrasonic homogenizer to obtain the CNTs 17. A length of the CNTs 17 in the dispersion 28 was 0.2 to 5 µm. In addition, the CNTs 17 in the dispersion 28 could be evaluated as having the bent shape. A concentration of the CNTs 17 in the dispersion 28 was set to 0.12 wt% (= 1200 wt ppm). A dispersing agent and an adhesive were not added to the dispersion 28.

As the carbon fiber bundle 12, TORAYCA (registered trademark) T700SC-12000 (manufactured by TORAY INDUSTRIES, INC.) was used. The carbon fiber bundle 12 includes 12000 carbon fibers 11. A diameter of the carbon fibers 11 is approximately 7 µm, and a length thereof is approximately 500 m. Note that, in the carbon fiber bundle 12, the sizing agent for preventing entanglement of the carbon fibers 11 was removed from the surfaces of the carbon fibers 11 before adhesion of the CNTs 17.

In a state of being opened, the carbon fiber bundle 12 was wound around the guide rollers 23 to 26 and was traveled in the dispersion 28 contained in the CNT adhesion tank 22. A traveling speed of the carbon fiber bundle 12 was set to 1 m/minute, and ultrasonic vibration having a frequency of 200 kHz was applied to the dispersion 28 with the ultrasonic wave generator 27. Note that, immersion time for which the carbon fiber bundle 12 travels between the guide rollers 24 and 25 was set to 6.25 seconds. The immersion time corresponds to 1250000 cycles of the ultrasonic vibration applied to the dispersion 28. In the dispersion 28, the carbon fiber bundle 12 was caused to travel at a depth D from a liquid surface of the dispersion 28 satisfying a relationship of "D = n·(λ/2)".

After the carbon fiber bundle 12 pulled out from the dispersion 28 was dried, the first sizing treatment was performed to apply the first sizing agent 15 to the CNTs 17 constituting the structure 14. In the first sizing treatment, a first sizing treatment solution obtained by dissolving "Carbodilite V-02" (trade name, manufactured by Nisshinbo Chemical Inc.) as a carbodiimide compound in water was used. A concentration of the carbodiimide compound in the first sizing treatment solution was adjusted so that a mass ratio Rm of a sizing agent becomes 1.0%. The carbon fiber bundle 12 that has undergone the first sizing treatment was dried to obtain the composite material 10.

It was observed that a plurality of CNTs 17 uniformly disperse and adhere to a plurality of carbon fibers 11 (hereinafter, referred to as "sample fibers") obtained by cutting a part of the carbon fiber bundle 12 that has undergone the first sizing treatment as described above with a SEM. As a result, it was confirmed that the CNTs 17 uniformly adhered even a narrow range (locally) and in a wide range in a fiber axis direction of the carbon fibers 11, and thus the structure 14 was formed. In addition, it was confirmed that the structure 14 was formed in a three-dimensional mesh structure constituted by a plurality of the CNTs 17, that is, a non-woven fabric shape having the gap 19, and the majority of the gap 19 was not filled up by the first sizing agent 15.

In the peeling test of the CNTs 17, the sample fibers were immersed in a mixed solution obtained by mixing water and a surfactant with each other, and ultrasonic vibration was applied from an ultrasonic wave generator to the mixed solution for 10 minutes. A length of the carbon fibers 11 immersed in the mixed solution was 1 m, a concentration of the surfactant in the mixed solution was 0.2 mass%, and a frequency of the ultrasonic vibration applied to the mixed solution was 100 kHz.

As Comparative Example 1, the CNT peeling test was performed with respect to carbon fibers obtained by performing the first sizing treatment by using a sizing treatment solution obtained by dissolving an epoxy resin instead of the carbodiimide compound in acetone. In Comparative Example 1, the same conditions were set except that the sizing treatment solution is different. A concentration of the epoxy resin in the sizing treatment solution was adjusted so that a mass ratio Rm of the sizing agent becomes 1.0%.

In the peeling test of Comparative Example 1, it was confirmed that the mixed solution became black and turbid, and 90% or more of CNTs were fall off from the carbon fibers through confirmation after the peeling test. In contrast, in the peeling test in Example 1, it was confirmed that the mixed solution was slightly turbid, and the CNTs 17 hardly fell off from the carbon fibers 11. That is, it could be understood that contact between the CNTs 17, and contact between the CNTs 17 and the carbon fibers 11 become strong due to the first sizing agent 15 having the carbodiimide-derived structure, collapse of the structure 14 and peeling-off of the structure 14 from the carbon fibers 11 are effectively suppressed.

### <Example 2>

In Example 2, a test piece A21 that is a carbon fiber-reinforced molded article was prepared by using a composite material 10 prepared under the same conditions as in Example 1, and a mode I interlayer fracture toughness test was performed. The test piece A21 was prepared to have a length of 160 mm, a width of 23 mm, and a thickness of 3 mm. In Example 2, the composite material 10 that has undergone the first sizing treatment was used. The test piece A21 was prepared by laminating a plurality of sheets of prepregs 31 cut into a rectangular shape (160 mm × 23 mm) and by heating the resultant laminated body while pressing the laminated body to cure the matrix resin 32. Each of the prepregs 31 was cut so that a longitudinal direction matches a fiber axis direction of the carbon fibers 11, and the fiber axis direction of the entirety of the carbon fibers 11 was caused to match a longitudinal direction of the test piece A21.

The mode I interlayer fracture toughness test was performed with respect to the test piece A21 in conformity to JIS K7086 by using an autograph universal testing machine AG5-5kNX (manufactured by SHIMADZU CORPORATION). As a test method, a double cantilever beam interlayer fracture toughness test method (DCB method) was used. That is, an initial crack of 2 mm to 5 mm was formed from the tip of the test piece A21 with a sharp knife or the like, and the crack was caused to further progress, and the test was terminated at the point of time when a crack progression length from the tip of the initial crack reached 60 mm. A crosshead speed of the test machine was changed in correspondence with the amount of crack progression. Specifically, the crosshead speed was set to 0.5 mm/minute until the amount of crack progression reached 20 mm. When the amount of crack progression exceeded 20 mm, the crosshead speed was set to 1 mm/minute. The crack progression length was measured from both side surfaces of the test piece A21 by using a microscope, and a load and a crack opening displacement were measured to obtain the mode I interlayer fracture toughness value (G_{IC}) from a load-crack opening displacement (COD) curve.

As Comparative Example 2, a composite material obtained by performing the first sizing treatment by using a sizing treatment solution obtained by dissolving an epoxy resin instead of the carbodiimide compound in acetone was used, and a test piece B21 that is a carbon fiber-reinforced molded article in which the composite material is set as a reinforcement fiber, and a test piece B22 that is a carbon fiber-reinforced molded article in which a carbon fiber (raw fiber) to which CNTs do not adhere is set as a reinforcement fiber were prepared, respectively, and the mode I interlayer fracture toughness test was performed. In the test piece B22, the sizing treatment was not performed. In Comparative Example 2, the other conditions were set to be the same as in the test piece A21.

The mode I interlayer fracture toughness strength GIR in a mode I interlayer fracture toughness value (GIC) when the amount of crack progression is 20 mm was 0.425 kJ/m² in the test piece A21 of Example 2, 0.323 kJ/m² in the test piece B21 of Comparative Example 2, and 0.231 kJ/m² in the test piece B22 of Comparative Example 2. From the results, it can be seen that the mode I interlayer fracture toughness strength GIR of test piece (carbon fiber-reinforced molded article) A21 of Example 2 was improved approximately 1.32 times in comparison to the test piece B21 of Comparative Example 2 and approximately 1.84 times in comparison to the test piece B22 of Comparative Example 2.

### <Example 3>

In Example 3, solid rods A31 and A32 which are carbon fiber-reinforced molded articles in which a composite material 10 prepared in a similar manner as in Example 1 was set as a reinforcement fiber were prepared, and a three-point bending test was performed with respect to the rods A31 and A32. In Example 3, a cylindrical molded article having a diameter of approximately 2.6 mm was prepared directly from the composite material 10 and a matrix resin by a pultrusion molding method, centerless polishing was performed with respect to the molded article, and the rods A31 and A32 having a diameter of approximately 2.2 mm and a cross-section close to a perfect circle were prepared. Accordingly, in the rods A31 and A32, an axial direction and the fiber axis direction of the carbon fibers 11 match each other. Note that, TORAYCA T700SC (manufactured by TORAY INDUSTRIES, INC.) was used as the carbon fibers 11 (raw fiber) of the rod A31, and TORAYCA T800SC (manufactured by TORAY INDUSTRIES, INC.) was used as the carbon fibers 11 (raw fiber) of the rod A32. The other preparation conditions of the rods A31 and A32 were set to be the same as in Example 1.

Each of the rods A31 and A32 was cut to prepare a plurality of test pieces having a length of 120 mm, and a three-point bending test was performed with respect to the test pieces in conformity to JIS K 7074:1988 "Testing methods for flexural properties of carbon fiber reinforced plastics". A distance between support points was set to 80 mm. With regard to the three-point bending test, a test in which a lowering speed of the indenter is set to be relatively low (hereinafter, referred to as "low-speed bending test") and a test in which the lowering speed is set to be relatively high (hereinafter, referred to as "high-speed bending test") were performed to obtain a fracture load (N), respectively. In the low-speed bending test, the lowering speed of the indenter was set to 5 mm/second, and in the high-speed bending test, the lowering speed of the indenter was set to two kinds of 1 m/second and 5 m/second. As the fracture load (N), a 60% conversion value of a fiber volume content (Vf) was obtained with respect to respective results of the low-speed bending test and the two kinds of high-speed bending tests. Note that, with respect to each of the rods A31 and A32, in any of the low-speed bending test and the two kinds of high-speed bending tests, a plurality of times of tests were performed by using a plurality of test pieces.

As Comparative Example 3, solid rods B31 and B32 which are carbon fiber-reinforced molded articles in which carbon fibers (raw fiber) to which CNTs do not adhere was set as a reinforcement fiber were prepared, and the three-point bending test was performed with respect to the rods B31 and B32. Carbon fibers of the rod B31 are the same as the carbon fibers of the rod A31, and carbon fibers of the rod B32 are the same as the carbon fibers of the rod A32. The rods B31 and B32 were prepared under the same conditions as in the rods A31 and A32 except that the carbon fibers were used as raw fiber. In addition, the three-point bending test with respect to the rods B31 and B32 was performed under the same conditions as in the rods A31 and A32 to obtain the fracture load (N).

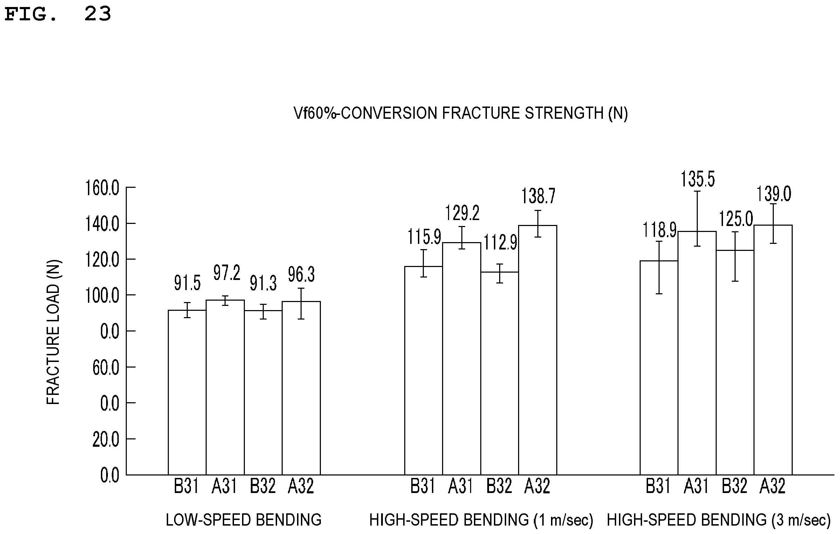

The above-described test results are shown in Fig. 23. In the low-speed bending test, the fracture strength of the rod A31 was further improved in comparison to the rod B31 by 11%, and the fracture strength of the rod A32 was further improved in comparison to the rod B32 by 23%. In addition, in the high-speed-bending test, the fracture strength of the rod A31 was further improved in comparison to the rod B31 by 14%, and the fracture strength of the rod A32 was further improved in comparison to the rod B32 by 11%.

### <Example 4>

In Example 4, ring-shaped test pieces A41 and A42 which are carbon fiber-reinforced molded articles using a composite material 10 prepared in a similar manner as in Example 1 were prepared, and an NOL ring test was performed. That is, tensile strength in a circumferential direction was obtained by using the ring-shaped test pieces A41 and A42 obtained by winding the composite material 10 as a fiber base material in parallel in one direction. The ring-shaped test pieces A41 and A42 were prepared by using a filament winding method. Specifically, the composite material 10 (CNT composite fibers) after the first sizing treatment was impregnated with a matrix resin was wound around a cylindrical mandrel attached to a filament winder, thereby forming a molded article. The molded article was heated in combination with the mandrel to cure the matrix resin. After curing of the matrix resin, the molded article from which the mandrel was pulled out was cut in a predetermined width to obtain the ring-shaped test pieces A41 and A42. The matrix resin was applied to the composite material 10 after the first sizing treatment by using a roll coater. TORAYCA T1100 (manufactured by TORAY INDUSTRIES, INC.) was used as the carbon fibers 11 (raw fiber). The other preparing conditions of the composite material 10 were set to be the same as in Example 1.

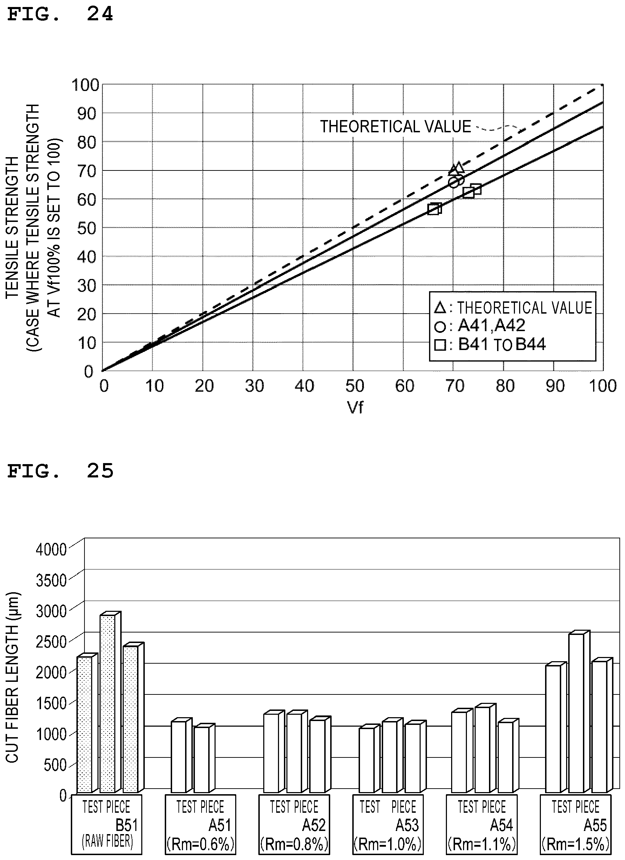

In the ring-shaped test pieces A41 and A42, an inner diameter was set to 35 mm, an outer diameter was set to 40 mm, and a width was set to 3 mm. In the NOL ring test, a 5582 type universal material test machine (manufactured by Instron) was used, and the test was performed at a tensile speed of 2 mm/min. The test results are shown in Fig. 24. In Fig. 24, the horizontal axis represents a fiber volume content (Vf), and the vertical axis represents an index value representing relative tensile strength in a case where a theoretical strength when the fiber volume content is 100% is set to 100. In addition, the graph of Fig. 24 also shows a theoretical value of the tensile strength with respect to the same fiber volume content as in the ring-shaped test pieces A41 and A42.

As Comparative Example 4, ring-shaped test pieces B41 to B44 which are carbon fiber-reinforced molded articles in which carbon fibers (raw fiber) to which CNTs do not adhere is set as a reinforcement fiber were prepared, and the NOL ring test was performed. As the carbon fibers of the ring-shaped test pieces B41 to B44, the same carbon fibers as in the ring-shaped test pieces A41 and A42 were used, and the ring-shaped test pieces B41 to B44 were prepared under the same conditions as in the ring-shaped test pieces A41 and A42 except that carbon fibers were used as raw fiber. Test results of the ring-shaped test pieces B41 to B44 of Comparative Example 4 are shown in Fig. 24.

From the graph in Fig. 24, it can be seen that in the ring-shaped test pieces A41 and A42 in which the carbon fibers 11 to which the CNTs 17 adhere are set as the reinforcement fiber, the tensile strength is further improved in comparison to the ring-shaped test pieces B41 to B44 in which the carbon fibers (raw fiber) are set as the reinforcement fiber, and the tensile strength is close to a theoretical value.

### [Example 5]

In Example 5, interface adhesion strength between the carbon fibers 11 and the matrix resin was evaluated by a fragmentation method. In addition, interface adhesion strength between the carbon fibers 11 and the matrix resin in accordance with a difference in the mass ratio Rm of the sizing agent was evaluated.

First, the concentration of the carbodiimide compound in the first sizing treatment solution was adjusted, and composite materials 10 in which the mass ratio Rm of the sizing agent are 0.6%, 0.8%, 1.0%, 1.1%, and 1.5% were prepared, respectively. With respect to each of the prepared composite materials 10, one CNT composite fiber is taken out from the carbon fiber bundle 12, and the CNT composite fiber was embedded in a soft epoxy resin, thereby preparing test pieces A51 to A55. With regard to the test pieces A51 to A55, three test pieces were prepared for each of a plurality of production lots of the composite material 10. TORAYCA T700SC (manufactured by TORAY INDUSTRIES, INC.) was used as the carbon fibers 11. Note that, the other preparation conditions of the composite material 10 were set to be the same as in Example 1.

After applying a tensile load to each of the test pieces A51 to A55 until the carbon fibers 11 were not cut, a length of each cut piece of the carbon fibers 11 at a constant length was measured with respect to each test piece, an average (cut fiber length) of lengths of cut pieces for every production lot was obtained with respect to each of the test pieces A51 to A55. The measurement results are shown in a graph of Fig. 25.

As Comparative Example 5, a test piece B51 in which one carbon fiber (raw fiber) to which CNTs do not adhere was embedded in a soft epoxy resin was prepared. As in the test pieces A51 to A55, a tensile load was applied to the test piece B51, and an average of lengths (cut fiber lengths) of cut pieces for every production lot was obtained. The measurement results are shown in the graph of Fig. 25. Note that, preparation conditions of the test piece B51 were set to be the same as in the test pieces A51 to A55 except that the CNTs did not adhere to the carbon fiber.

It can be seen that the cut fiber length of the test pieces A51 to A55 becomes shorter than the cut fiber length of the test piece B51 in Comparative Example 5, and the interface adhesion strength between the CNT composite fibers and the matrix resin becomes higher than that in test pieces including that of carbon fibers (raw fiber) to which CNTs did not adhere. In addition, it can be seen that the interface adhesion strength of the test pieces A51 to A54 in which the mass ratio Rm of the sizing agent is in a range of 0.6% to 1.1% is significantly higher in comparison to the test piece B51.

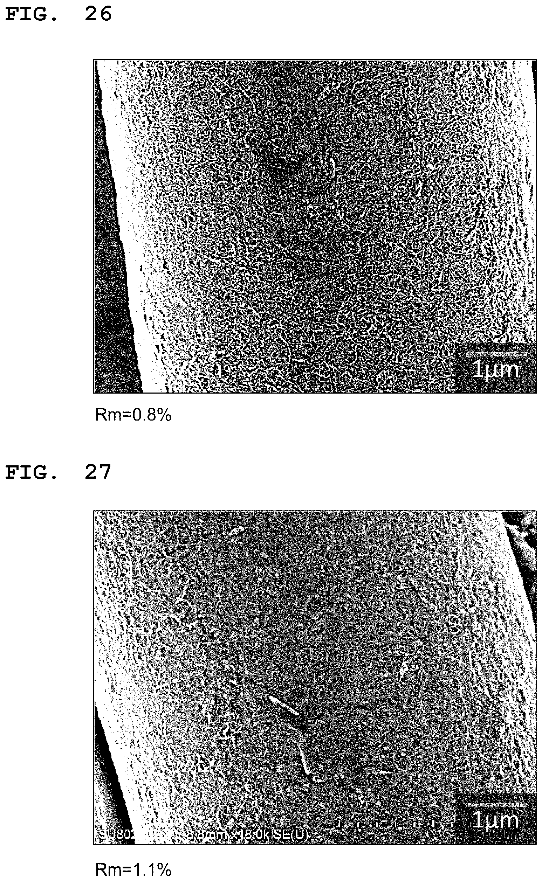

Among the composite materials 10 prepared as described above, with respect to composite materials in which the mass ratio Rm of the sizing agent is 0.8%, 1.1%, or 1.5%, observation states of the first sizing agent 15 on the surface of the structure 14 with a field emission scanning electron microscope are shown in Fig. 26 to Fig. 28. It was confirmed that the gap 19 formed by the CNTs 17 was not filled up by the first sizing agent 15 in the structure 14 in which the mass ratio Rm of the sizing agent is 0.8% or 1.1%, but the many gaps 19 were filled up by the first sizing agent 15 in the structure 14 in which the mass ratio Rm of the sizing agent is 1.5%.

### [Example 6]

An interface adhesion strength between the carbon fibers 11 and the matrix resin was evaluated by the fragmentation method when a CNT adhesion ratio to the carbon fibers 11 was changed. As Example 6, a test piece A61 was prepared as follows. A composite fiber in which the CNTs 17 adhered to the surfaces of the carbon fibers 11 uniformly and in a sufficient adhesion amount and the structure 14 was formed was embedded in a soft epoxy resin to prepare the test piece A61. In addition, as Comparative Example 6, a test piece B61 was prepared as follows. A composite fiber in which the structure 14 was formed on the surfaces of the carbon fibers 11 but the adhesion amount of the CNTs 17 was non-uniform was embedded in a soft epoxy resin to prepare the test piece B61. The composite fibers of the test pieces A61 and B61 were prepared under the same conditions except that presence or absence of nonuniformity of the adhesion amount to the structure 14 was different, and preparation conditions thereof are the same as in Example 1. The test pieces A61 and B61 were used after the first sizing treatment.

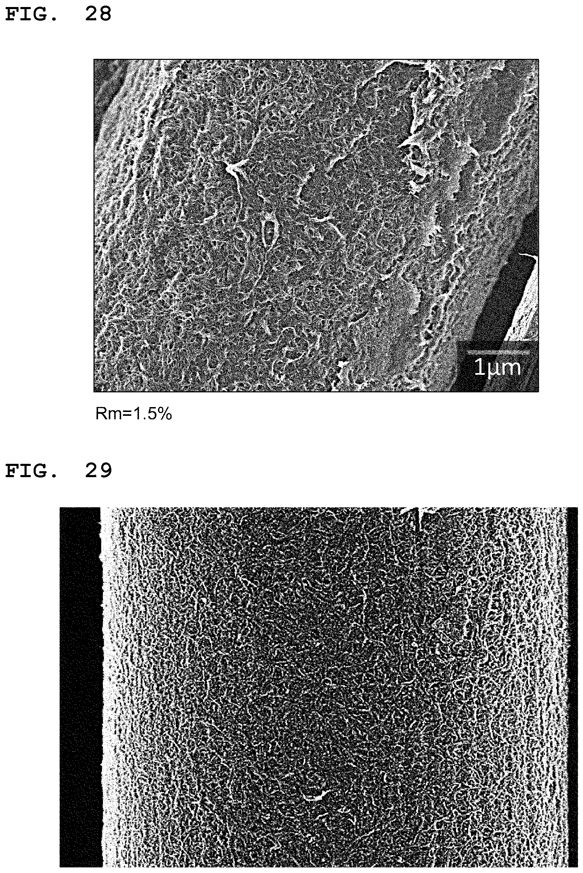

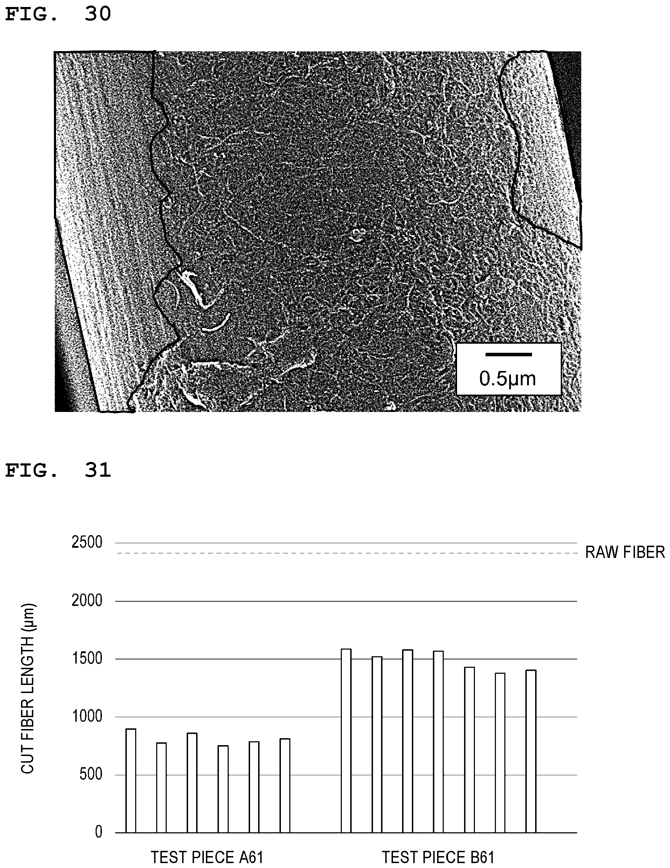

Fig. 29 shows a state of a surface of the structure 14 of the composite fiber that was used in the test piece A61 and observed with an electric field emission scanning electron microscope, and Fig. 30 shows a state of the surface of the structure 14 of the composite fiber used in the test piece B61. When the adhesion amount per unit area of the structure 14 of the test piece A61 is set to 100%, in the test piece B61, a portion (portion surrounded by a solid line in the drawings) where the adhesion amount per unit area is approximately 80% was formed on the surfaces of the carbon fibers 11, and the other portions were 100%.

Fig. 31 shows a cut fiber length of the test pieces A61 and B61 which was measured by the fragmentation method. Note that, a graph in Fig. 31 also shows a cut fiber length when using carbon fibers (raw fiber). From the graph, it could be confirmed that interface adhesiveness was improved by the CNTs.

### Reference Sign List

10: Composite material
11: Carbon fiber
12: Carbon fiber bundle
12P: Treated fiber bundle
14: Structure
15: First sizing agent
17: Carbon nanotube
37: Second sizing agent
54: Protection treatment process
56: Base material preparing process
57: Cleaning process
61: CNT composite fiber
P1: Protection agent
F: Reinforced fiber base material

## Claims

1. A composite material, comprising:
a base material;
a structure which includes a plurality of carbon nanotubes having a bent shape with a bent portion, forms a network structure including a contact portion where the carbon nanotubes are in direct contact with each other, and is provided on a surface of the base material; and
a first sizing agent that is provided at least around the contact portion, and cross-links the carbon nanotubes which are in direct contact with each other by a carbodiimide-derived structure obtained by reaction between a functional group of the carbon nanotubes and a carbodiimide group.

2. The composite material according to claim 1,
wherein the base material is a fiber, and
the carbon nanotubes which adhere to a surface of the fiber directly adhere to the surface of the fiber.

3. The composite material according to claim 1,
wherein the base material is a carbon fiber, and
the carbon nanotubes which adhere to a surface of the carbon fiber directly adhere to the surface of the carbon fiber.

4. The composite material according to claim 3,
wherein a mass of the first sizing agent is in a range of 0.6% to 1.1% with respect to a mass of the carbon fiber.

5. The composite material according to any one of claims 1 to 4, further comprising:
a second sizing agent that covers the carbon nanotubes.

6. The composite material according to any one of claims 2 to 4, further comprising:
a protection agent that adheres to a surface of the structure to cover the surface of the structure and is composed of a water-soluble polymer.

7. The composite material according to claim 6,
wherein the protection agent is polyvinyl alcohol or polyvinyl pyrrolidone.

8. A method for producing a composite material, comprising:
a structure forming process of immersing a base material in a dispersion in which a plurality of carbon nanotubes having a bent shape with a bent portion are dispersed and to which ultrasonic vibration is applied to adhere the plurality of carbon nanotubes to the base material, thereby forming a structure having a network structure including a contact portion where the carbon nanotubes are in direct contact with each other on a surface of the base material; and
a first sizing treatment process of causing the base material to come into contact with a first sizing treatment solution in which a carbodiimide compound having a carbodiimide group is dissolved to apply a first sizing agent for cross-linking the carbon nanotubes which are in direct contact with each other.

9. The method for producing a composite material according to claim 8,
wherein the first sizing agent cross-links the carbon nanotubes which are in direct contact with each other by a carbodiimide-derived structure obtained by reaction between a functional group of the carbon nanotubes and the carbodiimide group.

10. The method for producing a composite material according to claim 8 or 9,
wherein the first sizing treatment solution is obtained by dissolving a carbodiimide compound having a hydrophilic segment in water.

11. The method for producing a composite material according to any one of claims 8 to 10,
wherein the base material is a fiber, and
the carbon nanotubes which adhere to a surface of the fiber are caused to directly adhere to the surface of the fiber.

12. The method for producing a composite material according to any one of claims 8 to 10,
wherein the base material is a carbon fiber, and
in the structure forming process, the carbon nanotubes which adhere to a surface of the carbon fiber are caused to directly adhere to the surface of the carbon fiber.

13. The method for producing a composite material according to claim 12,
wherein in the first sizing treatment process, the mass of the first sizing agent is set in a range of 0.6% to 1.1% with respect to the mass of the carbon fiber.

14. The method for producing a composite material according to any one of claims 8 to 13, further comprising:
a second sizing treatment process of applying a second sizing agent for covering the carbon nanotubes after the first sizing treatment process.

15. The method for producing a composite material according to any one of claims 11 to 13, further comprising:
a protection treatment process of causing a protection agent, which covers a surface of the structure and is composed of a water-soluble polymer, to adhere to the surface of the structure to cover the surface of the structure after the first sizing treatment process.

16. The method for producing a composite material according to claim 15,
wherein the protection agent is polyvinyl alcohol or polyvinyl pyrrolidone.

17. A method for producing a reinforced fiber base material, comprising:
a base material preparing process of preparing a reinforced fiber base material by using a fiber bundle which is constituted by a plurality of fibers, in which a structure having a network structure including a contact portion where a plurality of carbon nanotubes having a bent shape with a bent portion are in direct contact with each other is formed on a surface of each of the plurality of fibers, and which includes a first sizing agent that is provided at least around the contact portion and cross-links the carbon nanotubes which are in direct contact with each other by a carbodiimide-derived structure obtained by reaction between a functional group of the carbon nanotubes and a carbodiimide group, and a protection agent that adheres to a surface of the structure to cover the surface of the structure and is composed of a water-soluble polymer; and
a cleaning process of cleaning the reinforced fiber base material with water to remove the protection agent from the reinforced fiber base material.

18. The method for producing a reinforced fiber base material according to claim 17,
wherein the protection agent is polyvinyl alcohol or polyvinyl pyrrolidone.

19. The method for producing a reinforced fiber base material according to claim 17 or 18,
wherein the fiber is a carbon fiber.
